# EUROPEAN PATENT SPECIFICATION

(11) **EP 4 217 961 B1**
(45) Date of publication and mention of the grant of the patent: **12.08.2026**
(21) Application number: 21791488.6
(22) Date of filing: 28.09.2021
(51) Int. Cl.: G06T 7/00, G06T 7/10, G06T 7/41, G06T 7/45

(54) **METHOD FOR DETERMINING WHETHER A CELL SHOWN IN A NUCLEAR FLUORESCENCE IMAGE ACQUIRED THROUGH CONFOCAL MICROSCOPE IS A DISEASED CELL, IN PARTICULAR A TUMOROUS CELL**
VERFAHREN ZUR BESTIMMUNG, OB EINE IN EINEM KONFOKALEN MIKROSKOP AUFGENOMMENEN NUKLEAREN FLUORESZENZBILD ANGEZEIGTE ZELLE EINE ERKRANKTE ZELLE, INSBESONDERE EINE TUMORZELLE IST
PROCÉDÉ POUR DÉTERMINER SI UNE CELLULE REPRÉSENTÉE DANS UNE IMAGE DE FLUORESCENCE NUCLÉAIRE ACQUISE PAR MICROSCOPE CONFOCAL EST UNE CELLULE MALADE, EN PARTICULIER UNE CELLULE TUMORALE

(30) Priority: 28.09.2020 IT 202000022801
(43) Date of publication of application: 02.08.2023
(73) Proprietor: Ospedale Pediatrico Bambino Gesù, 00165 Roma (IT); Sapienza Universita di Roma, 00185 Rome (IT)
(72) Inventor: FREZZA, Fabrizio, 00185 Roma (RM) (IT); MANGINI, Fabio, 00185 Roma (RM) (IT); TROIANO, Maurizio, 00185 Roma (RM) (IT); MUZI, Marco, 00063 Campagnano di Roma (RM) (IT); ALISI, Anna, 00165 Roma (RM) (IT)
(74) Representative: Ferriero, Paolo
(86) International application number: PCT/IT2021/050293
(87) International publication number: WO 2022/064539

(56) References cited:
- US-A1- 2019 042 826
- KATYAL RANVEER ET AL: "HEp-2 cell classification using multilevel wavelet decomposition", 2014 IEEE REGION 10 SYMPOSIUM, IEEE, 14 April 2014 (2014-04-14), pages 147 - 150, XP032778821, DOI: 10.1109/TENCONSPRING.2014.6863014
- FOGGIA PASQUALE ET AL: "Benchmarking HEp-2 Cells Classification Methods", IEEE TRANSACTIONS ON MEDICAL IMAGING, IEEE SERVICE CENTER, PISCATAWAY, NJ, US, vol. 32, no. 10, 1 October 2013 (2013-10-01), pages 1878 - 1889, XP011528121, ISSN: 0278-0062, [retrieved on 20130927], DOI: 10.1109/TMI.2013.2268163
- ABBAS ZEESHAN ET AL: "An Efficient Gray-Level Co-Occurrence Matrix (GLCM) based Approach Towards Classification of Skin Lesion", 2019 AMITY INTERNATIONAL CONFERENCE ON ARTIFICIAL INTELLIGENCE (AICAI), IEEE, 4 February 2019 (2019-02-04), pages 317 - 320, XP033543092, DOI: 10.1109/AICAI.2019.8701374
- ROSDI N T A MOHAMAD ET AL: "Hep-2 cell feature extraction using wavelet and independent component analysis", 2014 IEEE SYMPOSIUM ON INDUSTRIAL ELECTRONICS & APPLICATIONS (ISIEA), IEEE, 28 September 2014 (2014-09-28), pages 36 - 41, XP033157411, DOI: 10.1109/ISIEA.2014.8049868

## Description

The present invention relates to a method for determining whether a cell shown in a nuclear fluorescence image acquired through confocal microscope is a diseased cell, in particular a tumorous cell.

In particular, said method is designed to automatically identify any diseased cells (which may also be tumorous cells) starting from an image which shows the nuclei of respective cells, wherein said nuclei have been marked with a fluorescence technique and said image has been acquired through a confocal microscope.

More specifically, the method is designed to determine whether a cell of interest is diseased or healthy on the basis of results obtained by applying a plurality of statistical functions chosen to characterize the texture and preferably also the size and morphology of the nucleus of a cell of interest, wherein said statistical functions are calculated starting from a Co-occurrence matrix which contains information on the nucleus of the cell of interest in terms of texture, size and morphology.

The expression "nuclear fluorescence image" means an image containing a plurality of cells, wherein the nuclei of said cells have been marked with a fluorescence technique.

In particular, the fluorescence is obtained through a DNA intercalating agent.

In the following the description will be directed to a method for determining whether a cell of a liver tissue is a tumorous cell.

However, the method is not to be considered limited to this specific use.

In fact, the same method can be used to determine whether a cell in any body tissue is a diseased cell (and not necessarily a tumorous cell).

### Prior art

Data reported by the World Health Organization (WHO) shows that cancer is the second leading cause of death globally, with approximately 9.6 million deaths in 2018.

Among the most common malignant tumours are those of the lung, prostate, colorectal, stomach and liver in men, while breast, lung, cervical and thyroid cancer and colorectal cancer are more common among women.

Despite advances in research and technology in recent decades, the fight against cancer is not over.

Fortunately, mortality and morbidity from different types of cancer have significantly decreased over the past two decades.

However, therapy resistance problems, progression and recurrence of a tumour still plague many cancer survivors.

For this reason, an early diagnosis aimed at identifying the type and stage of a tumour is a fundamental element in the fight against cancer.

The current approach for diagnosing a tumour is based on a pathological analysis of the tumour and its characteristics.

The histopathological visualization phase or the morphometric analysis phase is performed by a pathologist and represents a key element in the pathological labelling of a tumour such as carcinoma, sarcoma or melanoma and is often the basis for the choice of treatment to be followed.

A disadvantage of this approach is due to the fact that often the morphometric analysis of a cell is a subjective analysis and depends on the interpretation of the pathologist since the tissue microenvironment can be highly heterogeneous.

In addition, a detailed morphometric analysis is required for the early identification of abnormal cells that may represent the start or trigger of the metastatic phase.

A disadvantage is due to the fact that a detailed morphometric analysis takes time and is subject to false positives and/or false negatives.

This is mainly due to the difficulty of identifying a small number of abnormal cells in a heterogeneous population of normal cells, such as in fine needle biopsies or in blood stains.

Currently, various technical solutions have been developed to reduce the subjectivity margin and the diagnosis time, as well as to increase the accuracy of the diagnosis.

Such solutions involve the use of computational methods that help the pathologist in the diagnosis.

Morphometric information of cell nuclei is one of the main clinical diagnostic approaches used by pathologists to determine the malignant potential of an abnormal cell.

The nucleus, in fact, reflects the potential and biological activity of a cell.

The nuclei of normal healthy cells are usually single for cell number, have a rounded or oval shape, and show a uniform chromatin distribution, as well as a normal edge and one or two inconspicuous nucleoli and normal mitotic figures.

During the development of cancer, the nucleus of a cell undergoes numerous alterations in terms of number, shape, size, chromatin distribution (pattern and organization), as well as in terms of the nuclear membrane and nucleoli.

Machine learning techniques (such as deep learning) applied to the image of a cell nucleus allow to classify (based on nuclear morphology) healthy and diseased cells with high precision [1].

Given the prominent role of changes of the nuclear structure in diseased cells, several machine learning techniques have been developed based on quantitative information about the size and shape of a cell nucleus, as well as the nucleus-cytoplasm relationship and chromatin consistency.

In this regard, a recent publication [2] shows how, by means of a deep learning technique, it is possible to correlate changes in heterochromatin with the ratios of euchromatin in normal and cancerous cell lines, so as to recognize any cancer cells in the case of breast cancer.

Methods using machine learning techniques involve dividing individual tissue images into areas with a predetermined number of pixels.

There are several studies and algorithms that have been implemented for the medical diagnosis of hepatocellular cancer and use the machine learning technique or the deep learning technique.

Most of these algorithms are applied to images obtained through Computed Axial Tomography (CT), Nuclear Magnetic Resonance (MRI) or ultrasound scanners.

The deep learning technique often involves a segmentation phase and the use of a convolution neural network (CNN).

However, a disadvantage of this technique involves the use of a large amount of data for training the neural network itself (Big Data).

There are some examples of automated diagnostic methods for hepatocarcinoma using a convolutional neural network [3-4].

However, these methods are based on the analysis of diagnostic images in resonance and ultrasound.

Consequently, the quality of these images depends on the operator.

Another method uses the deep learning technique to understand how sick a cell is compared to other diseased cells to determine the severity of a tumour [5].

However, this method is not capable of recognizing a healthy cell from a diseased cell.

A disadvantage of this method is that the segmentation step of an image of a cell is coarse as background portions are taken together with the cell.

A method for la classifying auto-antibodies is disclosed in a study titled *"*HEp-2 Cell Classification using Multilevel Wavelet Decomposition" in the name of Katyal et al.

The analysis of anti-nuclear antibodies in HEp-2 cells by Indirect Immunofluorescence (IIF) is considered a powerful and sensitive test per for auto-antibodies analysis for autoimmnune diseases.

The aim is to explore the use of the analysis of texture for automated categorization of auto-antibodies into one of the six categories of immunofluorescent staining which are frequently used in the daily diagnostic practice: centromere, nucleolar, homogeneous, fine speckled, coarse speckled, cytoplasmic.

The images of HEp-2 cells are acquired by a fluorescence microscope coupled with a 50W mercury vapour lamp and with a digital camera.

The data-set consists of 14 immunofluorescence images based on Hep-2 substrate contributing to a total of 721 cells.

The images are first manually segmented by cropping the cell shown in colour and the method consist of two main steps: extracting the characteristics of the cells by using a two-dimensional wavelet decomposition and classifying the cells by using a neural network.

The two-dimensional wavelet decomposition is a wavelet decomposition performed on an image in grey scale of each of 721 cell images.

Consequently, after segmentation and before the wavelet decomposition, each image is transformed in an image in grey scale.

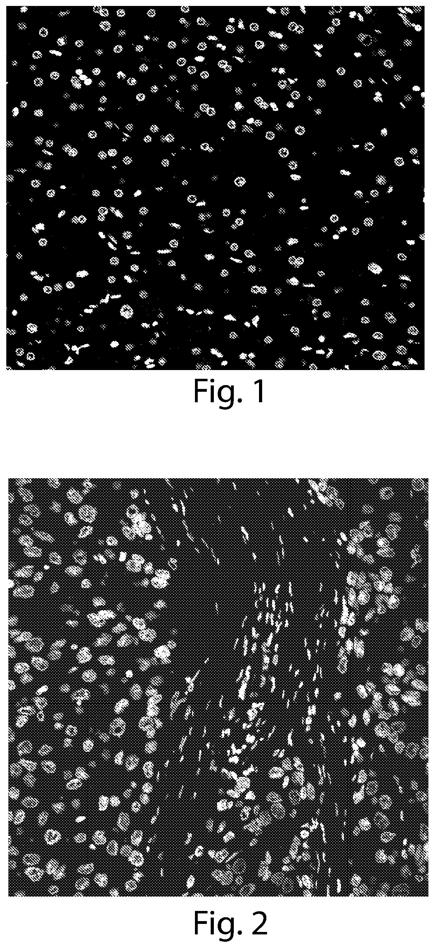

In particular, the extraction process of cell characteristics involves the repeated application of a Wavelet transform as shown in Figure 2 concerning the flow diagram of said extraction process.

A first Wavelet transform is applied to an image in grey scale and a first group of images is generated from said initial image in grey scale.

In the Wavelet field, the images of said first group of images are four and said images are called sub-bands. As a result, a first group of four sub-bands is generated from the first Wavelet transform.

The four sub-bands are the following: a first sub-band, a second sub-band concerning horizontal components of said image in grey scale, a third sub-band concerning vertical components of said image in grey scale and a fourth sub-band concerning diagonal components of said image in grey scale.

A second Wavelet transform is applied to the first sub-band of the first group of sub-bands and is generated a second group of four sub-bands.

A third Wavelet transform is applied to the first sub-band of the second group of four sub-bands and is generated a third group of four sub-bands.

The characteristics of the cells are extracted through a respective Co-occurrence matrix applied to three sub-bands: the second sub-band, the third sub-band and the fourth sub-band.

In particular, the characteristics are 19: Autocorrelation, Contrast, Correlation, Cluster Prominence, Cluster Shade, Dissimilarity, Energy, Entropy, Homogeneity, Maximum probability, Variance, Sum average, Sum variance, Sum entropy, Difference variance, Difference entropy, Information measure of correlation, Normalized inverse difference, Normalized inverse difference moment.

A feed-forward neural network is used for the classification of cells.

The data-set of images is divided into three sets of images and each set of images is provided as input to the neural network to classify the cells.

A first disadvantage of said known method is that the results are not accurate for carrying out a quantitative analysis of the images.

The images of the cell obtained through a fluorescence microscope are blurred and consequently some information necessary for the analysis of a cell cannot be taken into consideration.

A second disadvantage is that manual segmentation does not allow the cell to be cut out precisely and consequently the texture analysis is not accurate.

A further disadvantage is given by the fact that the Wavelet transform is applied only to the first sub-band and the Co-occurrence matrix is always applied to the remaining three sub-bands, different from said first sub-band.

The fact that each Wavelet transform is carried out only on the first sub-band implies the loss of information contained in the other sub-bands and the fact that each Co-occurrence matrix is applied to the remaining three sub-bands (and not to four sub-bands) implies the loss of information contained in the first sub-band. This involves an analysis of the cell texture with reduced accuracy.

### Aim of the invention

Aim of the present invention is to overcome said disadvantages, providing an automatic and efficient method for determining whether a cell shown in a nuclear fluorescence image obtained through a confocal microscope is a diseased cell, in particular a tumorous cell.

In particular, the method is conceived to determine whether the cell is a diseased cell on the analysis of the nucleus of said cell, taking into account one or more characteristics of said nucleus, i.e. texture and preferably size and morphology of said nucleus.

Advantageously, by means of the method object of the present invention it is possible to diagnose the type of tumour.

### Object of the invention

It is therefore object of the invention a method for determining whether at least a cell of body tissue shown in a nuclear fluorescence image acquired through a confocal microscope is a diseased cell, in particular a tumorous cell, wherein said fluorescence is obtained through a DNA intercalating agent and wherein said method comprises the following steps:
A) segmenting said nuclear fluorescence image to obtain at least one segmented image referred to a nucleus of a single cell;
B) inserting said at least one segmented image referred to said nucleus of said cell on a background having a predetermined colour to obtain at least one reference image, in which a reference matrix M_{REF} of dimensions M x N is associated with said reference image and to each pixel of said reference image corresponds to a respective number in said reference matrix whose value is the respective grey level of said pixel;
C) applying a discrete Wavelet transform to said reference matrix M_{REF} to obtain:
   a further first matrix associated with a further first image which is an image of the nucleus of the cell shown in said reference image, in which said further first image has a resolution lower than the resolution of said reference image,
   a further second matrix associated with a further second image referred to the horizontal components of said reference image,
   a further third matrix associated with a further third image referred to the vertical components of said reference image,
   a further fourth matrix associated with a further fourth image referred to the diagonal components of said reference image,
   in which each of said further matrices is a matrix of dimensions M' x N' and a pixel in position x, y of each further image corresponds to a respective number in position x,y inside a respective further matrix M₁,M₂,M₃,M₄ and the value of said number is the respective grey level of said pixel;
D) creating a respective Co-occurrence matrix for each of said further four matrices, in which each Co-occurrence matrix contains information on the nucleus of said cell in terms of texture, magnitude and morphology, and is a matrix of dimensions G x G, where G is the number of grey levels and each of said Co-occurrence matrices has in a respective position i,j the number of pairs of elements of a respective further matrix, in which each pair of elements is associated with a respective pair of pixels and is formed by a first element associated with a first pixel of said pair of pixels having a grey level equal to i, and by a second element associated with a second pixel of said pair of pixels, different from said first pixel and having a grey level equal to j, where i is a positive integer i = 0...G and j is a positive integer j = 0...G;
E) calculating a plurality of statistical functions starting from each Co-occurrence matrix to characterize at least the texture of the nucleus of said cell, in which each statistical function is associated with a respective parameter of a further image of the nucleus of said cell and the result of each statistical function is a respective number, so that a vector of numbers comprising four sub-vectors is associated with the nucleus of said cell, wherein each sub-vector is associated with a respective further image and contains k elements in which k is the number of said statistical functions,
F) supplying as input to a predetermined neural network the results of said statistical functions, in which said predetermined neural network comprises an output layer with at least a first output node and is configured to provide as output a first numerical value between 0 and 1 at said first output node,
G) comparing said first numerical value with a predetermined threshold,
H) determining whether said cell is a diseased cell, in particular a tumorous cell, when said first numerical value is greater than said predetermined threshold

Further embodiments of the method are disclosed in the dependent method claims.

It is also object of the invention a system for determining whether at least a cell of body tissue shown in a nuclear fluorescence image acquired through a confocal microscope is a diseased cell, in particular a tumorous, wherein said fluorescence is obtained through a DNA intercalating agent and wherein said system comprises:
- storage means in which said nuclear fluorescence image and a predetermined threshold are stored,
- a predetermined neural network comprising an output layer, wherein said output layer comprises at least one first output node, and configured to provide as output a first numerical value between 0 and 1 at said first output node,
- a logic control unit, connected to said storage means and to said predetermined neural network and configured to:
   ∘ segment said nuclear fluorescence image to obtain at least one segmented image referred to a nucleus of a single cell;
   ∘ insert said at least one segmented image referred to said cell on a background having a predetermined colour to obtain at least one reference image, in which a reference matrix of dimensions M x N is associated with said reference image and to each pixel of said reference image corresponds a respective number in said reference matrix whose value is the respective grey level of said pixel;
   ∘ apply a discrete Wavelet transform to said reference matrix to obtain:
      a further first matrix associated with a further first image which is an image of the nucleus of the cell shown in said reference image, in which said further first image has a resolution lower than the resolution of said reference image,
      a further second matrix associated with a further second image referred to the horizontal components of said reference image,
      a further third matrix associated with a further third image referred to the vertical components of said reference image,
      a further fourth matrix associated with a further fourth image referred to the diagonal components of said reference image,
      in which each of said further matrices is a matrix of dimensions M' x N' and a respective number in position x,y inside a respective further matrix corresponds a pixel in position x,y of each further image and the value of said number is the respective grey level of said pixel;
   ∘create a respective Co-occurrence matrix for each of said further four matrices, in which each Co-occurrence matrix contains information on the nucleus of said cell in terms of texture, magnitude and morphology, and is a matrix of dimensions G x G, where G is the number of grey levels and each of said Co-occurrence matrices has in a respective position i,j the number of pairs of elements of a respective further matrix, in which each pair of elements is associated with a respective pair of pixels and is formed by a first element associated with a first pixel of said pair of pixels having a grey level equal to i and by a second element associated with a second pixel of said pair of pixels, different from said first pixel and having a grey level equal to j, where i is a positive integer i = 0...G and j is a positive integer j = 0...G
   ∘ calculate a plurality of statistical functions SF₁,SF₂...SF_{N} starting from each Co-occurrence matrix to characterize at least the texture of the nucleus of said cell, in which each statistical function is associated with a respective parameter of a further image of the nucleus of said cell and the result of each statistical function is a respective number, so that a vector of numbers comprising four sub-vectors is associated with the nucleus of said cell, wherein each sub-vector is associated with a respective further image and contains k elements in which k is the number of said statistical functions,
   ∘ supply as input to said predetermined neural network the results of said statistical functions,
   ∘ compare said first numerical value with said predetermined threshold stored in said storage means,
   ∘ determine whether said cell is a diseased cell, in particular a tumorous cell, when said first numerical value is greater than said predetermined threshold.

Further embodiments of the system are disclosed in the system dependent claims.

The present invention relates also to the computer program, comprising code means configured in such a way that, when executed on a computer, perform the steps of the method disclosed above.

Furthermore, the present invention relates to a computer-readable storage medium comprising instructions which, when executed by a computer, cause the computer to carry out the steps of the method disclosed above.

### Figure list

The present invention will be now described, for illustrative, but not limitative purposes, according to its embodiment, making particular reference to the enclosed figures, wherein:
Figure 1 is an image of a healthy liver tissue wherein a plurality of cells are present and the respective nucleus of said cells has been marked with a fluorescence technique;
Figure 2 is an image of a diseased liver tissue wherein a plurality of cells are present and the respective nucleus of said cells has been marked with a fluorescence technique;
Figure 3 is a high contrast image (in description called reference image) which shows the nucleus of a single cell extracted from the image concerning the diseased liver tissue shown in Figure 2, wherein such a high contrast image has been obtained by inserting a segmented image of the nucleus of said cell on a background of black colour;
Figures 4A, 4B, 4C e 4D represent four further images obtained by applying a discrete Wavelet transform to the image of Figure 3, wherein:

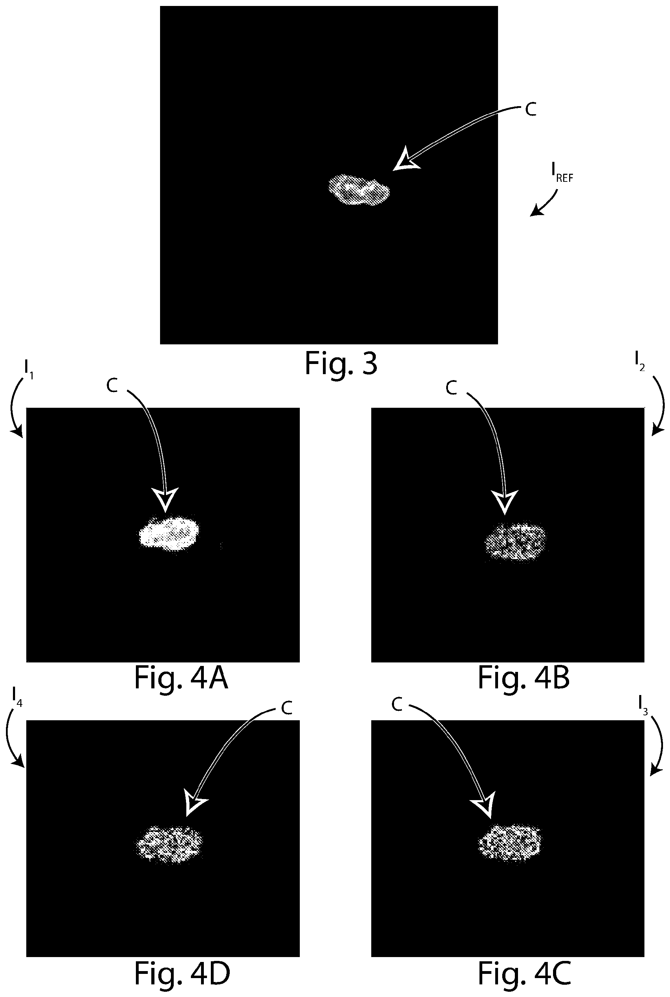

   Figure 4A is an image of nucleus of the cell with a resolution less than the resolution of image of Figure 2,
   Figure 4B is an image referred to the horizontal components of the image of Figure 3,
   Figure 4C is an image referred to the vertical components of the image of Figure 3, e
   Figure 4D is an image referred to the diagonal components of the image of figure 3;

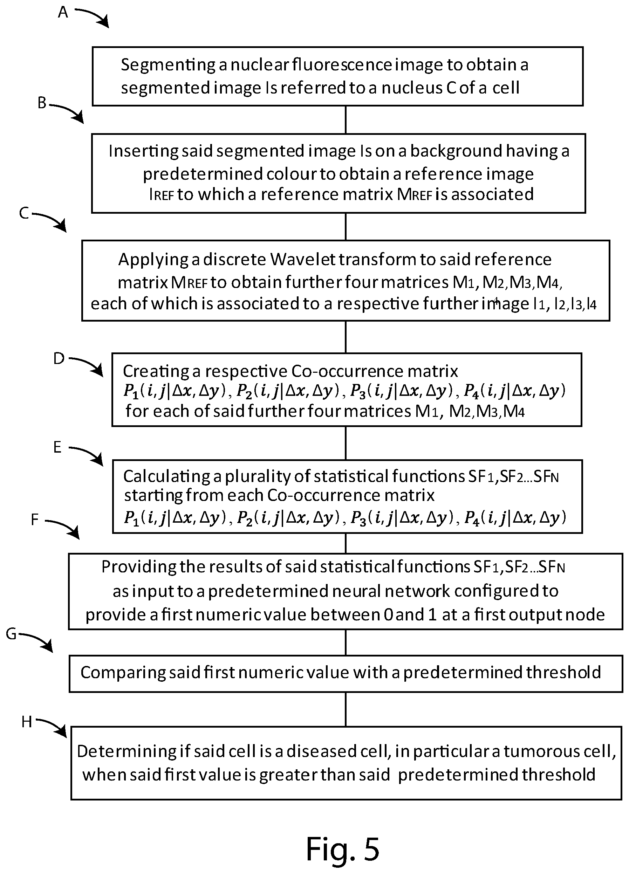

   Figure 5 shows a flow chart of the method object of the invention;

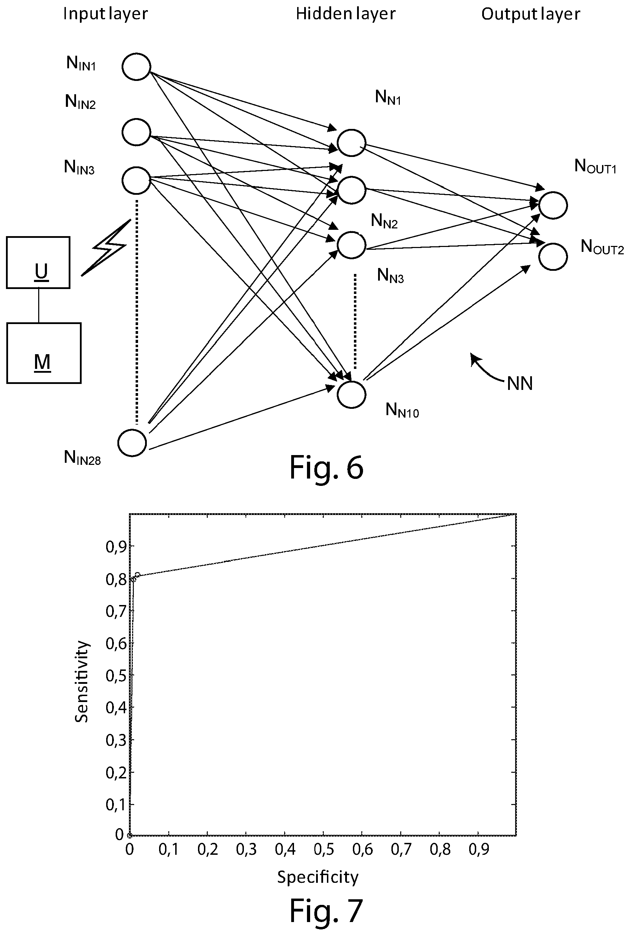

   Figure 6 is a schematic view of a system, according to the invention, comprising storage means, in which an image of diseased liver tissue and a predetermined threshold are stored, as well as a neural network and a logic control unit, connected to said storage means and to said neural network;
   Figure 7 shows a ROC curve obtained from an image by applying a predetermined threshold value to the output of the neural network.

### Detailed description of the invention

With reference to Figure 2-5 a method for determining whether at least one cell shown in a nuclear fluorescence image acquired through a confocal microscope is a diseased cell.

In particular, the method is conceived to verify whether the nucleus of a celli s the nucleus of a diseased cell, through an analysis of some characteristics of the nucleus itself.

Although the method can be applied to a nucleus of a healthy cell of a liver tissue (shown in figure 1), in the embodiment that is described, the nucleus of the cell is the nucleus of a diseased cell of a liver tissue (shown in Figure 2) and in particular said diseased cell is a tumour cell.

In particular, Figure 2 is an image showing the nuclei of respective cells of a tumour liver tissue, Figure 3 is an image of one of the nuclei shown in Figure 2, and Figures 4A, 4B, 4C, 4D are a respective image of the same nucleus obtained by applying a Wavelet transform to the image of Figure 3, as described below.

Furthermore, the image shown in Figure 2 from which the images of Figure 3, 4A, 4B, 4C and 4d are derived, is a nuclear fluorescence image acquired through a confocal microscope.

In particular, said fluorescence is obtained through a DNA intercalating agent, i.e. a chemical agent capable of binding to the cell's DNA and emitting fluorescence.

Said DNA intercalating agent can be a fluorochrome and preferably the DRAQ5.

The DRAQ5 is an anthraquinone-based dye that binds stoichiometrically to the DNA present into the nucleus of a cell and emits fluorescence.

The fact that the image of the cell is a nuclear fluorescence image (in which the fluorescence is obtained through said DNA intercalating agent and not through an antibody), and that said image is obtained with a confocal microscope allows the method object of the present invention to accurately determine if a cell is diseased on the basis of the analysis of some characteristics of the nucleus of said cell, such as texture, size and morphology.

This makes the method object of the present patent application different from the methods of the known type which are designed to analyse whether a cell expresses a protein or not to answer a diagnostic question.

In the disclosed embodiment, the fluorescence technique was performed on images of sections of a diseased liver tissue fixed in formalin and included in paraffin.

The nuclei of the cells present in said sections of liver tissue have been marked using a fluorochrome, DRAQ5, diluted 1: 5000 and incubated for 5 minutes at room temperature.

After washing the liver tissue sections, a drop of phosphate buffer saline (PBS)/glycerol (1: 1) was placed on those liver tissue sections which were subsequently covered with a coverslip.

The images concerning liver tissue sections have been acquired through a confocal microscope Olympus Fluoview FV1000 provided with software FV10-ASW version 4.1, by using a lens 40× and a further lens 20× (numerical opening: 0,75).

Individual liver tissue sections have been acquired with a scan format of 1024 × 1024 pixels, a sampling rate equal to 20 µs/pixel, and the images are 12-bit/pixel images.

The mixing of the fluorochromes was carried out through the automatic sequential acquisition of multi-channel images, in order to reduce the spectral crosstalk between the channels.

The fluorochrome is a molecule which, when excited by photons emitted from a light radiation source, emits further photons having a wavelength greater than the wavelength of the photons with which the fluorochrome was excited.

In particular, the DRAQ5 has an optimal excitation wavelength of 647 nm and its emission spectrum has a peak value in the 681/697 nm band.

This fluorochrome is used to highlight the DNA present in the cell nucleus.

Hepatocarcinoma is difficult to identify and has abnormal group of hepatocytes, as well as anomalies of the nucleus.

Therefore, one or more liver cells will have a high N/C (nucleus/cytoplasm) ratio.

The essential features that will be highlighted will concern the alteration of the nuclei of the liver cells that will appear large and often joined together.

With reference to the method object of the invention, said method comprises the following steps:
A) segmenting said nuclear fluorescence image to obtain at least one segmented image I_{S} referred to a nucleus C of a single cell;
B) inserting said at least one segmented image Is referred to said nucleus C of said cell on a background having a predetermined colour to obtain at least one reference image I_{REF}, in which a reference matrix M_{REF} of dimensions M x N is associated with said reference image I_{REF} and to each pixel of said reference image I_{REF} corresponds a respective number in said reference matrix M_{REF} whose value is the respective grey level of said pixel;
C) applying a discrete Wavelet transform to said reference matrix M_{REF} (associated with said reference image I_{REF}) to obtain further four matrices M₁,M₂,M₃,M₄, different one from the other, each of which is associated with a further image I₁,I₂,I₃,I₄ of the same nucleus C of said cell:
   a further first matrix M₁ associated with a further first image I₁ (shown in Figure 4A) which is an image of the nucleus C of the cell shown in said reference image I_{REF}, in which said further first image I₁ has a resolution lower than the resolution of said reference image I_{REF},
   a further second matrix M₂ associated with a further second image I₂ (shown in Figure 4B) which is an image referred to the horizontal components of said reference image I_{REF},
   a further third matrix M₃ associated with a further third image I₃ (shown in Figure 4C) which is referred to the vertical components of said reference image I_{REF},
   a further fourth matrix M₄ associated with a further fourth image I₄ (shown in Figure 4D) referred to the diagonal components of said reference image I_{REF},
   in which each of said further matrices M₁,M₂,M₃,M₄ is a matrix of dimensions M' x N' (different from the dimensions M x N of the reference matrix M_{REF}) and a pixel in position x, y of each further image I₁,I₂,I₃,I₄ corresponds to a respective number in position x,y inside a respective further matrix M₁,M₂,M₃,M₄ and the value of said number is the respective grey level of said pixel;
D) creating a respective Co-occurrence matrix *P*₁(*i, j*|Δ*x,* Δ*y*), *P*₂(*i, j*|Δ*x,* Δ*y*), *P*₃(*i, j*|Δ*x,* Δ*y*), *P*₄(*i, j*|Δ*x,* Δ*y*) for each of said further four matrices M₁,M₂,M₃,M₄, in which each Co-occurrence matrix contains information on the nucleus C of said cell in terms of texture, magnitude and morphology, and is a matrix of dimensions G x G, where G is the number of grey levels and each of said Co-occurrence matrices *P*₁(*i, j*|Δ*x*, Δ*y*), *P*₂(*i, j*|Δ*x,* Δ*y*), *P*₃(*i, j*|Δ*x,* Δ*y*), *P*₄(*i, j*|Δ*x,* Δ*y*) has in a respective position i,j the number of pairs of elements of a respective further matrix M₁,M₂,M₃,M₄, in which each pair of elements is associated with a respective pair of pixels and is formed by a first element associated with a first pixel of said pair of pixels having a grey level equal to i and by a second element associated with a second pixel of said pair of pixels, different from said first pixel and having a grey level equal to j, where i is a positive integer i = 0...G and j is a positive integer j = 0...G;
E) calculating a plurality of statistical functions SF₁,SF₂...SF_{N} starting from each Co-occurrence matrix *P*₁(*i, j*|Δ*x,* Δ*y*), *P*₂(*i, j*|Δ*x,* Δ*y*), *P*₃(*i, j*|Δ*x,*Δ*y*),*P*₄(*i, j*|Δ*x,* Δ*y*) to characterize at least the texture of the nucleus C of said cell, in which each statistical function SF₁,SF₂...SF_{N} is associated with a respective parameter of a further image of said nucleus C of said cell and the result of each statistical function SF₁,SF₂...SF_{N} is a respective number, so that a vector V of numbers comprising four sub-vectors v₁,v₂,v₃,v₄, is associated with the nucleus C of said cell, each sub-vector being associated with a respective further image I₁,I₂,I₃,I₄ and containing k elements in which k is the number of said statistical functions,
F) supplying as input to a predetermined neural network NN the results of said statistical functions SF₁,SF₂...SF_{N}, in which said predetermined neural network NN comprises at least one output node N_{OUT1} and is configured to provide as output a first numerical value between 0 and 1 at said first output node N_{OUT1},
G) comparing said first numerical value with a predetermined threshold (i.e. a predetermined threshold value),
H) determining whether said cell is a diseased cell, in particular a tumorous cell, when said first numerical value is greater than said predetermined threshold.

Figure 5 shows the flow chart of the method disclosed above.

With reference to step A, a segmented image I_{S} of the nucleus C of a single cell is obtained.

In the embodiment being described, as already said, said celli s a cell of a diseased liver tissue.

The number of pixels of the segmented image I_{S} does not depend on the dimensions of the nucleus of the cell.

In the embodiment being described, the segmentation is a binary segmentation.

It is known that the binary segmentation applies to an image in grey scale and allows to distinguish an object (in the specific case the nucleus of a cell) from its background. As a result, if the image originally acquired was an image in colour, it would be necessary to transform said image in colour in a image in grey scale before performing a binary segmentation.

If the grey level of a pixel is greater than a predetermined threshold value, this pixel belongs to the object, otherwise this pixel belongs to the background.

With reference to step B, as said, the segmented image I_{S} of the nucleus C of the cell is inserted in a background of a predetermined colour, so that the resulting image is a reference image I_{REF}.

A reference matrix M_{REF} is associated with to said reference image I_{REF}.

A respective number in said reference matrix M_{REF} is associated with each pixel of said reference image I_{REF} and the value of said number is the respective grey level of said pixel.

As already said, the predetermined colour for the background is preferably the black colour.

Advantageously, from the computational point of view, a number equal to 0 is associated with each pixel having black colour.

The scale of grey levels goes from black colour to the white colour and the number 0 corresponds to the black colour.

Consequently, the reference image I_{REF} is the real image of the nucleus C of the cell, since the background of black colour is not taking into account.

However, the predetermined colour for the background can be a colour different from the black colour, such as dark blue, without departing from the scope of the invention.

With reference to step C, the discrete Wavelet transform allows to disclose the texture of the nucleus of the cell.

The discrete Wavelet transform is applied to the reference matrix M_{REF} associated with reference image I_{REF} (i.e. the image obtained by inserting the segmented image I_{S} on a background of a predetermined colour) and allows to obtain four further matrices M₁,M₂,M₃,M₄ associated with respective further images I₁,I₂,I₃,I₄ of the nucleus of the same cell.

Each further matrix M₁,M₂,M₃,M₄ has dimensions M' x N'.

The sum of said further matrices M₁,M₂,M₃,M₄ is a matrix of dimensions M x N.

If on the hand, as said, said further first image I₁ is an image of the nucleus of the cell shown in said reference image I_{REF} wherein said further first image I₁ has a resolution less than the resolution of said reference image I_{REF}, on the other hand, said further first image I₁ is the only further image in which the real perimeter of the nucleus of the cell is visible.

The other further images (i.e. the further second image I₂, the further third image I₃ and the further fourth image I₄) are images of the same nucleus C of the cell respectively referring to the horizontal components of the nucleus of the cell, to the vertical components of the nucleus of the cell and to the diagonal components of the nucleus of the cell.

Furthermore, the discrete Wavelet transform mentioned in step C of the method is a transform of first order.

However, the discrete Wavelet transform can be a transform of any order, without departing from the invention.

In case of discrete Wavelet transforms of order higher than the first order, for example up to the third order, the Wavelet transform of second order will be applied to the further images I₁, I₂, I₃, I₄ which are the four sub-bands obtained from the Wavelet transform of first order and the Wavelet transform of third order will be applied to the further images which will be the four sub-bands obtained from the Wavelet transform of second order.

With reference to step D, a respective Co-occurrence *P*₁(*i, j*|Δ*x,* Δ*y*) *P*₂(*i, j*lΔ*x,* Δ*y*) *P*₃(*i, j*|Δ*x,* Δ*y*) *P*₄(*i*, *j*|Δ*x*, Δy) is created for each further matrix M₁,M₂,M₃,M₄ obtained through the discrete Wavelet transform (as well as associated with a respective further image I₁,I₂,I₃,I₄).

In general, the Co-occurrence matrix contains information on the characteristics of the nucleus C of the cell and the information on the texture, on the size and on morphology is present among this information.

Each Co-occurrence matrix *P*₁(*i, j*|Δ*x,* Δ*y*) *P₂*(*i, j*|Δ*x,* Δ*y*) *P*₃(*i, j*|Δ*x,* Δ*y*) *P*₄(*i*, *j*|Δ*x*, Δ*y*) is calculated according to the following formula: ${P}_{z} \left(i,j,Δx,Δy\right) = {W}_{z} {Q}_{z} \left(i,j\left|Δx,Δy\right.\right)$ where
z is an index to indicate the respective Co-occurrence matrix, wherein said index is a positive integer z=1...4; ${W}_{z} = \frac{1}{\left(M′-Δx\right) \left(N′-Δy\right)}$
where
*W*_{z} is a number referred to the number of possible pairs of elements associated with respective pairs of pixels;
Δ*x,* Δ*y* are respective position operators referred to the distance between said first element associated with said first pixel of said pair of pixels and said second element associated with said second pixel of said pair of pixels; ${Q}_{z} \left(i,j\left|Δx,Δy\right.\right) = {\sum }_{n ′ = 1}^{N ′ - Δ y} {\sum }_{m ′ = 1}^{M ′ - Δ x} A$
where
*Q_{z}* is a number referred to the number of pairs of elements of a further matrix, wherein each pairs of elements is formed by said first element associated with said first pixel with grey level equal to i and by said second element associated with said second pixel with grey level equal to j;
Δ*x,* Δ*y* are respective position operators referred to the distance between said first element associated with said first pixel with grey level equal to i and said second element associated with said second pixel with grey level equal to j;
*A* is a function which provides as output a numerical value equal to 1 when pairs of elements formed by a first element associated with a first pixel with a grey level equal to i and by a second element associated with a second pixel with a grey level equal to j are present, otherwise provides a further numerical value equal to 0;
*m', n'* are respectively the number of rows and of columns of a further matrix associated with a respective further image.

Each Co-occurrence matrix *P*₁(*i, j*|Δ*x,* Δ*y*) *P*₂(*i, j*|Δ*x,* Δ*y*) *P*₃(*i, j*|Δ*x,* Δ*y*) *P*₄(*i*, *j*|Δ*x*, Δ*y*) is a matrix of dimensions G x G, wherein G is the number of grey levels associated to the pixel present in said further matrices M₁,M₂,M₃,M₄.

Each Co-occurrence matrix *P*₁(*i, j*|Δ*x,* Δ*y*) *P*₂(*i, j*|Δ*x,* Δ*y*) *P*₃(*i, j*|Δ*x,* Δ*y*) *P*₄(*i, j*|Δ*x,* Δ*y*) has in a respective position i,j the number of pairs of elements of a respective further matrix M₁,M₂,M₃,M₄, wherein each pair pf elements is associated with a respective pair of pixels.

In particular, each pair of elements is formed by a first element associated with a first pixel of said pair of pixels having a grey level equal to i and by a second element associated with a second pixel of said pair of pixels, different from said first pixel and having a grey level equal to j.

Consequently, in each element in position i,j of a respective Co-occurrence matrix *P*₁(*i, j*|Δ*x,* Δ*y*) *P*₂(*i, j*|Δ*x,* Δ*y*) *P*₃(*i, j*|Δ*x,* Δ*y*) *P*₄(*i, j*|Δ*x,* Δ*y*) a triple contribution is present: the grey level of a first pixel, the grey level of a second pixel, different from said first pixel, and the number of pairs of pixels formed by a first pixel and by a second pixel with respective grey levels.

With reference to step E, a plurality of statistical functions SF₁,SF₂...SF_{N} are calculated starting from each Co-occurrence matrix *P*₁(*i, j*|*Δx,* Δ*y*) *P*₂(*i, j*|Δ*x,* Δ*y*) *P*₃(*i, j*|Δ*x,* Δ*y*) *P*₄(*i, j*|Δ*x,* Δ*y*).

Said statistical functions are predetermined and chosen to characterize at least the texture and preferably the size and the morphology of the nucleus C of the cell, as explained below.

In other words, a respective plurality of statistical functions SF₁,SF₂...SF_{N} is calculated for each of said Co-occurrence matrix *P*₁(*i, j*|Δ*x,* Δ*y*) *P*₂(*i, j*|Δ*x,* Δ*y*) *P*₃(*i, j*|Δ*x,* Δ*y*) *P*₄(*i, j*|Δ*x,* Δ*y*).

The result of each statistical function SF₁,SF₂...SF_{N} is a respective number, so that a vector V of numbers comprising four sub-vectors v₁,v₂,v₃,v₄ (i.e. V = [v₁;v₂;v₃;v₄]) is associated with the nucleus C of said cell.

Each of said sub-vectors v₁,v₂,v₃,ᵥ₄ is associated with a respective further image I₁,I₂,I₃,I₄ and contains k elements wherein k is the number of the used statistical functions (i.e. the number of elements is equal to the number of statistical functions).

In the embodiment being described, said plurality of statistical functions comprises seven statistical functions SF₁,SF₂...SF₇, mentioned below.

A first statistical function SF₁ named Inverse Difference Moment (IDM) is conceived to indicate a homogeneity in the distribution of grey levels ${IDM}_{z} = {\sum }_{i = 1}^{N ′} {\sum }_{j = 1}^{N ′} \frac{{P}_{z} \left(i,j\left|Δx,Δy\right.\right)}{{\left|i-j\right|}^{2}} i \neq j$ where
*P*_{z}(*i, j*|Δ*x,* Δ*y*) is the Co-occurrence matrix;
*i* is a number that identifies the grey level associated with said first pixel of a further image;
*j*.is a number that identifies the grey level of said second pixel of said further image, in which said second pixel is different from said first pixel and is positioned next to said first pixel or at a predetermined distance from said first pixel.

Said first statistical function SF₁ is a measure of the homogeneity of the image (i.e. of a homogeneity of the grey levels) and therefore offers an indication of how much the image is free of significant variations between two grey levels.

The greater the numerical result of said first statistical function SF1, the lower the numerical result of a further statistical function called Contrast mentioned below.

A second statistical function SF₂ named Energy (EN) is conceived to indicate a homogeneity in the structure of the texture of the nucleus of the cell: ${EN}_{z} = {\sum }_{i = 1}^{N ′} {\sum }_{j = 1}^{N ′} {{P}_{z}}^{2} \left(i,j\left|Δx,Δy\right.\right)$ where
*P_{z}*(*i, j*|Δ*x,* Δ*y*) is the Co-occurrence matrix.

In other words, said second statistical function SF₂ relates to the structure of the texture of the nucleus of the cell intended as a macrostructure of the texture, since it refers to the nucleus of the cell in its entirety.

A third statistical function SF₃ named Norm Entropy (NE) is conceived to take into account the level of clutter between pixels: ${NE}_{z} = \frac{{\sum }_{i = 1}^{N ′} {\sum }_{j = 1}^{N ′} {\left|{P}_{z}\left(i,j\left|Δx,Δy\right.\right)\right|}^{p}}{N ′}$ where
*P_{z}*(*i, j*|Δ*x,* Δ*y*) is the Co-occurrence matrix;
*p* = 1,5

In other words, the numerical result of said third statistical function SF₃ is the higher the closer the numerical values associated with the respective grey levels are to the maximum value of the grey levels, based on the number of grey levels with which it has been chosen to encode the reference image.

The numerical result of said third statistical function will be greater the closer the grey levels are to 256.

In a further example, if the grey levels range from 0 to 56, the numerical result of said third statistical function will be greater the closer the grey levels are to 56.

A fourth statistical function SF₄ named Local Homogeneity (LO) is conceived to indicate the presence of homogeneous areas or non-homogeneous areas: ${LO}_{z} = {\sum }_{i = 1}^{N ′} {\sum }_{j = 1}^{N ′} \frac{{P}_{z} \left(i,j\left|Δx,Δy\right.\right)}{1 + {\left(i-j\right)}^{2}}$ where
*P_{z}*(*i, j*|Δ*x,* Δ*y)* is the Co-occurrence;
*i* is a number that identifies the grey level associates with said first pixel of a further image;
*j* is a number that identifies the grey level of said second pixel of said further image, in which said second pixel is different from said first pixel and is positioned next to said first pixel or at a predetermined distance from said first pixel.

The numerical result of said fourth statistical function SF₄ is higher the higher the number of homogeneous areas inside the cell nucleus is, and lower the higher the number of inhomogeneous areas inside the nucleus of the cell.

A fifth statistical function SF₅ named Cluster Shade (CS) is conceived to indicate an asymmetry of the Co-occurrence matrix: ${CS}_{z} = {\sum }_{i = 1}^{N ′} {\sum }_{j = 1}^{N ′} {\left(i-{Px}_{z}+j-{Py}_{z}\right)}^{3} {P}_{z} \left(i,j\left|Δx,Δy\right.\right)$ where
P_{z}(i, j|Δx, Δy) is the Co-occurrence matrix; ${Px}_{z} = {\sum }_{i , j = 1}^{N ′} iP \left(i,j\left|Δx,Δy\right.\right)$ ${Py}_{z} = {\sum }_{i , j = 1}^{N ′} jP \left(i,j\left|Δx,Δy\right.\right)$
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel;

A sixth statistical function SF₆ named Cluster Prominence (CP) is conceived to indicate a further asymmetry of the Co-occurrence matrix: ${CP}_{z} = {\sum }_{i = 1}^{N ′} {\sum }_{j = 1}^{N ′} {\left(i-{Px}_{z}+j-{Py}_{z}\right)}^{4} {P}_{z} \left(i,j\left|Δx,Δy\right.\right)$ where
*P_{z}*(*i, j*|Δ*x,* Δ*y*) è la matrice di Co-occorrenza; ${Px}_{z} = {\sum }_{i , j = 1}^{N ′} iP \left(i,j\left|Δx,Δy\right.\right)$ ${Py}_{z} = {\sum }_{i , j = 1}^{N ′} jP \left(i,j\left|Δx,Δy\right.\right)$
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel;

The higher the numerical results of said fifth statistical function SF₅ and of said sixth statistical function SF₆ the more the Co-occurrence matrix is asymmetric with respect to its diagonal.

A seventh statistical function SF₇ named Contrast (CO) is conceived to identify the difference in intensity between two grey levels, a first grey level associated with said first pixel and a second grey level associated with said second pixel: ${CO}_{z} = {\sum }_{i = 1}^{N ′} {\sum }_{j = 1}^{N ′} {\left(i-j\right)}^{2} {P}_{z} \left(i,j\left|Δx,Δy\right.\right)$ where
*P_{z}*(*i, j*|Δ*x,* Δ*y*) is the Co-occurrence matrix;
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel.

The higher the numerical result of said seventh statistical function SF₇, the higher the sum of the difference in intensity between the intensities of two pixels of a pair of pixels.

As mentioned, said two pixels can be placed side by side one or the other or at a predetermined distance between them.

As regards said seventh statistical function SF₇, it is preferable that said two pixels are side by side.

With reference to vector V, said vector V is given by four sub-vectors v₁,v₂,v₃ v₄, each of which is formed by the numerical results of the seven statistical functions SF₁SF₂...SF₇ mentioned above and referred to a respective Co- occurrence matrix *P*₁(*i, j*|Δ*x,* Δ*y*) *P*₂(*i, j*|Δ*x,* Δ*y*) *P*₃(*i, j*|Δ*x, Δy*) *P*₄(*i, j*|Δ*x,* Δ*y*).

In other words, the vector *V=*[*IDM*₁, *EN*₁, *NE*₁, *LO*₁*, CS*₁*, CP*₁*, CO*₁*; IDM*₂*, EN*₂*, NE*₂*, LO*₂*, CS*₂, *CP*₂*, CO*₂; *IDM*₃*, EN*₃*, NE*₃*, LO*₃*, CS*₃*, CP*₃*, CO*₃*; IDM*₄*, EN*₄*, NE*₄, *LO*₄*, CS*₄, *CP*₄*, CO*₄].

Consequently, in the embodiment being described, each sub-vector v₁,v₂,v₃,v₄ is so defined: ${v}_{1} = \left[{IDM}_{1}, {EN}_{1}, {NE}_{1}, {LO}_{1}, {CS}_{1}, {CP}_{1}, {CO}_{1}\right] ;$ ${v}_{2} = \left[{IDM}_{2}, {EN}_{2}, {NE}_{2}, {LO}_{2}, {CS}_{2}, {CP}_{2}, {CO}_{2}\right] ;$ ${v}_{3} = \left[{IDM}_{3}, {EN}_{3}, {NE}_{3}, {LO}_{3}, {CS}_{3}, {CP}_{3}, {CO}_{3}\right] ;$ ${v}_{4} = \left[{IDM}_{4}, {EN}_{4}, {NE}_{4}, {LO}_{4}, {CS}_{4}, {CP}_{4}, {CO}_{4}\right] .$

However, it is preferable that said plurality of statistical functions comprises two further statistical functions to also characterize the size and texture of the nucleus of said cell: an eighth statistical function SF₈ and a ninth statistical function SF₉.

The eighth statistical function SF8 called Extension is conceived to offer an estimate of the size of the cell nucleus C through the number of pairs of pixels, each of which is formed by a respective first pixel and a respective second pixel, different from said first pixel and positioned next to said first pixel, in which the first pixel and the second pixel of each pair of pixels have a grey level equal to 0: $EX = 1 / {P}_{z} \left(i=1,j=1\left|Δx,Δy\right.\right)$ where
*P_{z}*(*i* = *1, j =* 1|Δ*x,* Δ*y*) is the first element of the Co-occurrence matrix.

The greater the number of pixel pairs with both pixels having a grey level equal to 0, the smaller the size of the cell nucleus.

Consequently, this eighth statistical function offers an estimate of the size of the cell's nucleus.

A ninth statistical function SF₉ named EdgeLengthEstimate is conceived to offer an estimate of the perimeter of the nucleus C of the cell through the number of pairs of pixels, each of which is formed by a respective first pixel and a respective second pixel, different from said first pixel and positioned next to said first pixel, in which one of said two pixels has a grey level equal to 0: $ELE = {\sum }_{i = 2}^{N} {P}_{z} \left(i,j=1\left|Δx,Δy\right.\right) + {\sum }_{j = 2}^{N} {P}_{z} \left(i=1,j\left|Δx,Δy\right.\right)$ where
*P_{z}*(*i, j =* 1|Δ*x,* Δ*y*) with *i* # 1 is the sum of the elements of the first row of the Co-occurrence matrix;
*P_{z}*(*i* = 1, *j*|Δ*x,* Δ*y*) with *j ≠* 1 is the sum of the elements of the first column of the Co-occurrence matrix.

As can be seen from the formula, the ninth statistical function allows to add a first number which is the result of the sum of all the elements of the first row of the Co-occurrence matrix with a second number which is the result of the sum of the elements of the first column of the same Co-occurrence matrix.

The result obtained by adding said first number and said second number is the number of pairs of pixels arranged on the edge of the nucleus of the cell.

This ninth statistical function offers an estimate of the perimeter of the cell nucleus.

The values of the eighth statistical function and the ninth statistical function offer an estimate of the size and morphology of a nucleus of a cell.

In fact, if the value of the eighth statistical function is low and the value of the ninth statistical function is high, it means that the nucleus of the cell has a jagged edge and a jagged edge may be characteristic of a tumorous cell.

To determine the size and morphology of the nucleus of the cell, the same matrix, from which information on the texture of said nucleus was obtained, has been used, so as to simplify the calculations and optimize the calculation time.

If nine statistical functions, each of the four sub-vectors v₁,v₂,v₃,v₄ mentioned above would be formed by the numerical results of nine statistical functions SF₁,SF₂ ...SF₉ and referred to a respective Co-occurrence matrix *P*₁(*i, j*|Δ*x,* Δ*y*) *P*₂(*i, j*|Δ*x,* Δ*y*) *P*₃(*i, j*|Δ*x,* Δ*y*) *P*₄(*i, j*|Δ*x,* Δ*y*).

In other words, the vector *V=*[*IDM*₁*, EN*₁*, NE*₁*, LO*₁, *CS*₁*, CP*₁*, CO*₁*, EX*₁*, ELE*₁; *IDM₂, EN*₂*, NE*₂*, LO*₂*, CS*₂*, CP*₂*, CO*₂*, EX*₂*, ELE*₂; *IDM*₃*, EN*₃*, NE*₃*, LO*₃*, CS₃, CP*₃*, CO*₃*, EX*₃*, ELE*₃*; IDM*₄*, EN₄, NE*₄*, LO*₄*, CS*₄*, CP*₄*, CO*₄*, EX*₄*, ELE*₄].

Consequently, each sub-vector v₁,v₂,v₃,v₄ would be so defined: ${v}_{1} = \left[{IDM}_{1}, {EN}_{1}, {NE}_{1}, {LO}_{1}, {CS}_{1}, {CP}_{1}, {CO}_{1}, {EX}_{1}, {ELE}_{1}\right] ;$ ${v}_{2} = \left[{IDM}_{2}, {EN}_{2}, {NE}_{2}, {LO}_{2}, {CS}_{2}, {CP}_{2}, {CO}_{2}, {EX}_{2}, {ELE}_{2}\right] ;$ ${v}_{3} = \left[{IDM}_{3}, {EN}_{3}, {NE}_{3}, {LO}_{3}, {CS}_{3}, {CP}_{3}, {CO}_{3}, {EX}_{3}, {ELE}_{3}\right] ;$ ${v}_{4} = \left[{IDM}_{4}, {EN}_{4}, {NE}_{4}, {LO}_{4}, {CS}_{4}, {CP}_{4}, {CO}_{4}, {EX}_{4}, {ELE}_{4}\right] .$

With reference to step F, as said, said predetermined neural network NN is designed to provide at least a first numerical value between 0 and 1 at a respective output node, i.e. the first output node.

In particular, in the embodiment being described, said predetermined neural network is a feed-forward neural network.

Furthermore, the learning method for said neural network is a quasi-Newton method.

With reference to steps G and H, said first numerical value will be compared with a predetermined threshold and the cell will be considered a diseased cell, if said first numerical value is greater than said predetermined threshold.

With particular reference to steps G and H, said step G can comprise a sub-step G1 of approximating said first numerical value to 1, when said first numerical value is greater than said predetermined threshold, and to 0, when said first numerical value is less than or equal to said predetermined threshold, and with reference to step H said cell is a diseased cell, in particular a tumorous cell, when said first numerical value is approximated to1.

Returning to step F, in the embodiment being described, said predetermined neural network NN comprises a second output node N_{OUT2}.

Furthermore, said predetermined neural network NN is configured to provide as output a second numerical value between 0 and 1 at said second output node N_{OUT2}.

Said second numerical value is compared with the same predetermined threshold with which the first numerical value is compared.

After the comparison with said predetermined threshold, said second numerical value is approximated to 1 or 0.

A diseased cell (in the embodiment being described) is identified by a first numerical value (at the first output node N_{OUT1}) which has been approximated to 1 and by a second numerical value (at the second output node N_{OUT2}) which was approximated to 0.

A healthy celli s identified by a first numerical value (at the first output node N_{OUT1}) which has been approximated to 0 and by a second numerical value (at the second output node N_{OUT2}) which was approximated to 1.

In other words, the steps from F to H have been modified as follows.

The step F of the method that said predetermined neural network NN is configured to provide as output a second numerical value at said second output node N_{OUT2}.

The step G of the method comprises the comparison of said second numerical value at said second output node N_{OUT2} with said predetermined threshold.

The step H of the method allows to determine if the nucleus C of said celli s the nucleus of a diseased cell, in particular a tumorous cell, when said first numerical value is greater than said predetermined threshold and said second numerical value is less than or equal to said predetermined threshold.

In particular, the step G can comprise a sub-step G2 of approximating the second numerical value to 1, when said second numerical value is greater than said predetermined threshold, and to 0, when said second numerical value is less than or equal to said predetermined threshold and with reference to step H said cell is a diseased cell, in particular a tumorous cell, when said first numerical value is approximated to 1 and when said second numerical value is approximated to 0.

With reference to two output nodes N_{OUT1},N_{OUT2}, said two output nodes N_{OUT1},N_{OUT2} are included in a output layer of said predetermined neural network NN.

As is clear from the system capable of implementing this method, shown in figure 6 and explained below, said predetermined neural network NN further comprises:
- an input layer comprising a number of input nodes N_{IN1},N_{IN2}...N_{INF} equal to the total number of statistical functions SF₁,SF₂...SF_{N} calculated for each Co-occurrence matrix, wherein F=1,...,T with T positive integer and is the index of the number of input nodes equal to the total number of the calculated statistical functions, and
- at least a hidden layer comprising at least a respective first hidden node NN1.

With reference to the input layer, in the embodiment being described, said input layer comprises twenty-eight input nodes N_{IN1},N_{IN2}...N_{IN28}, each of which is associated with a respective numerical result of each of said seven statistical functions SF₁,SF₂...SF₇ for each of the four Co-occurrence matrix M₁,M₂,M₃,M₄.

With reference to the hidden layer, in the embodiment being described, said hidden layer comprises ten hidden nodes N_{N1},N_{N2}...N_{N10}.

The present invention also relates to a system, shown in Figure 6, for determining whether at least a cell of body tissue shown in a nuclear fluorescence image acquired through a confocal microscope is a diseased cell, in particular a tumorous cell.

Said system comprises:
- storage means SM in in which said nuclear fluorescence image and a predetermined threshold are stored,
- a predetermined neural network NN comprising an output layer, wherein said output layer comprises at least one first output node N_{OUT1}, and configured to provide as output a first numerical value between 0 and 1 at said first output node N_{OUT1},
- a logic control unit U, connected to said storage means MM and to said predetermined neural network NN and configured to:
   ∘ segment said nuclear fluorescence image to obtain at least one segmented image I_{S} referred to a nucleus C of a single cell;
   ∘ insert said at least one segmented image I_{S} referred to said nucleus C of said cell on a background having a predetermined colour to obtain at least one reference image I_{REF}, in which a reference matrix M_{REF} of dimensions M x N is associated with said reference image I_{REF} and to each pixel of said reference image I_{REF} corresponds a respective number in said reference matrix M_{REF} whose value is the respective grey level of said pixel;
   ∘ apply a discrete Wavelet transform to said reference matrix M_{REF} to obtain further four matrices M₁,M₂,M₃,M₄, different from each other, each of which is associated with a respective further image I₁,I₂,I₃,I₄ of the same nucleus C of the cell:
      a further first matrix M₁ associated with a further first image I₁ which is an image of the nucleus C of the cell shown in said reference image I_{REF}, in which said further first image I₁ has a resolution lower than the resolution of said reference image I_{REF},
      una ulteriore seconda matrice M₂ associata ad una ulteriore seconda immagine I₂ riferita alle componenti orizzontali di detta immagine di riferimento I_{REF},
      a further second matrix M₂ associated with a further second image I₂ referred to the horizontal components of said reference image IREF,
      a further third matrix M₃ associated with a further third image I₃ referred to the vertical components of said reference image I_{REF},
      a further fourth matrix M₄ associated with a further fourth image I₄ referred to the diagonal components of said reference image I_{REF},
      in which each of said further matrices M₁,M₂,M₃,M₄ is a matrix of dimensions M' x N' and a respective number in position x,y inside a respective further matrix M₁,M₂,M₃,M₄ corresponds a pixel in position x,y of each further image I₁,I₂,I₃,I₄ and the value of said number is the respective grey level of said pixel;
   ∘ create a respective Co-occurrence matrix *P*₁(*i, j*|Δ*x,* Δ*y*), *P*₂(*i, j*|Δ*x,* Δ*y*), *P*₃(*i, j*|Δ*x,* Δ*y*), *P*₄(*i, j*|Δ*x,* Δ*y*) for each of said further four matrices M₁,M₂,M₃,M₄, in which each Co-occurrence matrix contains information on the nucleus C of said cell in terms of texture, magnitude and morphology, and is a matrix of dimensions G x G, where G is the number of grey levels and each of said Co-occurrence matrices *P*₁(*i, j*|Δ*x,* Δ*y*), *P*₂(*i, j*|Δ*x,* Δ*y*), *P*₃(*i, j*|Δ*x,* Δ*y*), *P*₄(*i, j*|Δ*x,* Δ*y*) has in a respective position i,j the number of pairs of elements of a respective further matrix M₁,M₂,M₃,M₄, in which each pair of elements is associated with a respective pair of pixels and is formed by a first element associated with a first pixel of said pair of pixels having a grey level equal to i and by second element associated with a second pixel of said pair of pixels, different from said first pixel and having a grey level equal to j, where i is a positive integer i = 0...G and j is a positive integer j = 0...G;
   ∘ calculate a plurality of statistical functions SF₁,SF₂...SF_{N} starting from each Co-occurrence matrix *P*₁(*i, j*|Δ*x,* Δ*y*), *P*₂(*i, j*|Δ*x,* Δ*y*), *P*₃(*i, j*|Δ*x,* Δy), *P*₄(*i, j*|Δ*x,* Δ*y*) to characterize at least the texture of the nucleus C of said cell, in which each statistical function SF₁,SF₂...SF_{N} is associated with a respective parameter of a further image of the nucleus C of said cell and the result of each statistical function SF₁,SF₂...SF_{N} is a respective number, so that a vector V of numbers comprising four sub-vectors v₁,v₂,v₃,v₄, is associated with the nucleus C of said cell, each of which is associated with a respective further image I₁,I₂,I₃,I₄ and contains k elements in which k is the number of said statistical functions,
   ∘ supply as input to said predetermined neural network NN the results of said statistical functions SF₁,SF₂...SF_{N} to obtain a first numerical value between 0 and 1 at said first output node N_{OUT1},
   ∘ compare said first numerical value with said predetermined threshold stored in said storage means SM,
   ∘ determine whether said cell is a diseased cell, in particular a tumorous cell, when said first numerical value is greater than said predetermined threshold.

In particular, said logic control unit U is configured to approximate said first numerical value to 1, when said first numerical value is greater than said predetermined threshold, and to 0, when said first numerical value is less than or equal to said predetermined threshold, and to determine whether the nucleus C of a cell is the nucleus of a diseased cell, in particular a tumorous cell, when said first numerical value is approximated to 1.

Furthermore, as said for the method, said first output node is included in the output layer of said predetermined neural network NN.

Said predetermined neural network NN can comprise a second output node N_{OUT2} (also included in said output layer) and said predetermined neural network NN can be configured to provide a second numerical value between 0 and 1 at said second output node N_{OUT2} (in addition to the first numerical value and always on the basis of the results of the statistical functions provided as input to the neural network), and said logic control unit U can be configured to compare said second numerical value with said predetermined threshold and determine whether said cell C is a diseased cell, in particular a tumorous cell, when said second numerical value is less than or equal to said predetermined threshold, besides said first numerical value is greater than said predetermined threshold.

In particular, said logic control unit U can be configured to approximate said second numerical value to 1, when said second numerical value is greater than said predetermined threshold, and to 0, when said second numerical value is less than or equal to said predetermined threshold, and to determine whether the nucleus C of said cell is the nucleus of a diseased cell, in particular the nucleus of a tumorous cell, when said second numerical value is approximated to 0, besides said first numerical value is approximated to 1.

As said for the method, said plurality of statistical functions can comprise seven statistical functions to characterize the texture and preferably two further statistical functions to characterize the size and the morphology of the nucleus of a cell.

The present invention relates to a computer program, comprising code means configured in such a way that, when executed on a computer, perform the steps of the method described above.

Furthermore, the present invention also relates to a computer-readable storage medium comprising instructions, which, when executed by a computer, cause the computer to carry out the steps of the method described above.

### Example of creating a Co-occurrence matrix

Below, an example of how a Co-occurrence matrix is created starting from a further matrix associated with a further image, wherein said further matrix has dimensions 5 x 5 (consequently M' is equal to 5 and N' is equal to 5) and said further image is coded with 5 levels of grey (i.e. through the values 0,1,2,3,4).

It is assumed that said further matrix is the further first matrix M₁ for convenience.

Below is an example of said further first matrix: ${M}_{1} = \left[\begin{matrix}0 & 1 & 1 & 2 & 3 \\ 0 & 0 & 2 & 3 & 3 \\ 0 & 1 & 2 & 2 & 3 \\ 1 & 2 & 3 & 2 & 2 \\ 2 & 2 & 3 & 3 & 2\end{matrix}\right]$

As mentioned, the Co-occurrence matrix is defined by the following general formula: ${P}_{z} \left(i,j,Δx,Δy\right) = {W}_{z} ⋅ {Q}_{z} \left(\left.i, j\right|Δx,Δy\right)$

In the example being described Δ*x* =1 and Δ*y =* 0.

This means that pairs of elements of said further matrix are taken into consideration (in which each element corresponds to a respective pixel) formed by two elements side by side, i.e. a first element and a second element arranged within said further matrix in the position subsequent to said first element.

Consequently, the general formula indicated above becomes: ${P}_{1} \left(i, j, 1, 0\right) = {W}_{1} {Q}_{1} \left(\left.i, j\right|1,0\right)$

In the example being described the parameter *W*₁ (i.e. the number referred to the number of possible pairs of elements associated with a respective pixel pairs) becomes: ${W}_{1} = \frac{1}{\left(M′-Δx\right) ⋅ \left(N′-Δy\right)} = \frac{1}{\left(5-1\right) ⋅ \left(5-0\right)} = \frac{1}{20}$

As regards the calculation of the parameter *Q*₁ (i.e. the number referred to the number of pairs of elements of a further matrix, wherein each pair of elements is formed by said first element associated with said first pixel with grey level equal to i and from said second element associated with said second pixel with grey level equal to j), in order to facilitate the calculation of this parameter, a table is shown below which shows the number of pairs of elements as i and j vary.

| | | **j** | | | |
|---|---|---|---|---|---|
| | | **0** | **1** | **2** | **3** |
| **i** | **0** | 1 | 2 | 1 | 0 |
| | **1** | 0 | 1 | 3 | 0 |
| | **2** | 0 | 0 | 3 | 5 |
| | **3** | 0 | 0 | 2 | 2 |

With reference to the first row of the table:
when i = 0 and j = 0 a pair of elements [0,0] is present in the further first matrix M₁ (see second row),
when i = 0 and j = 1 two pair of elements [0,1] are present in the further matrix M₁ (see first row and third row),
when i = 0 and j = 2 a pair of elements [0,2] is present in the further first matrix M₁ (see second row),
when i = 0 and j = 3 no pair of elements [0,3] is present in the further first matrix M₁.

With reference to the second row of the table:
when i = 1 and j = 0 no pair of elements [1,0] is present in the further first matrix M₁,
when i = 1 an j = 1 a pair of elements [1,1] is present in the further first matrix M₁ (see first row),
when i = 1 and j = 2 three pair of elements [1,2] are present in the further first matrix M₁ (see first row, third row and fourth row),
when i = 1 and j = 3 no pair of elements [1,3] is present in the further first matrix M₁.

With reference to the third row of the table:
when i = 2 and j = 0 no pair of elements [2,0] is present in the further first matrix M₁,
when i = 2 and j = 1 no pair of elements [2,1] is present in the further first matrix M₁,
when i = 2 and j = 2 three pair of elements [2,2] are present in the further first matrix M₁ (see third row, fourth row and fifth row),
when i = 2 and j = 3 five pair of elements [2,3] are present in the further first matrix M₁ (see first row, second row, third row, fourth row and fifth row).

With reference to the fourth row of the table:
when i = 3 and j = 0 no pair of elements [3,0] is present in the further first matrix M₁,
when i = 3 and j = 1 no pair of elements [3,1] is present in the further first matrix M₁,
when i = 3 and j = 2 two pair of elements [3,2] are present in the further first matrix M₁ (see fourth row and fifth row),
when i = 3 and j = 3 two pair of elements [2,3] are present in the further first matrix M₁ (see second row and fifth row).

As a result: ${Q}_{1} = \left[\begin{matrix}1 & 2 & 1 & 0 \\ 0 & 1 & 3 & 0 \\ 0 & 0 & 3 & 5 \\ 0 & 0 & 2 & 2\end{matrix}\right]$ and ${P}_{1} \left(i, j, 1, 0\right) = \frac{1}{20} ⋅ \left[\begin{matrix}1 & 2 & 1 & 0 \\ 0 & 1 & 3 & 0 \\ 0 & 0 & 3 & 5 \\ 0 & 0 & 2 & 2\end{matrix}\right] = \left[\begin{matrix}1 / 20 & 2 / 20 & 1 / 20 & 0 \\ 0 & 2 / 20 & 3 / 20 & 0 \\ 0 & 0 & 3 / 20 & 5 / 20 \\ 0 & 0 & 2 / 20 & 2 / 20\end{matrix}\right]$

### Test example for the method described above

A nuclear fluorescence image of a liver tissue containing a number of cells equal to 573 (including healthy cells and diseased cells) has been processed through the method above describe, by using a neural network already trained with other nuclear fluorescence images concerning a plurality of cells present in a healthy and diseased liver tissue. The results have been compared with the results of the traditional anatomy-pathological methods.

Furthermore, in order to evaluate the robustness of the method described above, it has been chosen to apply different predetermined threshold values to determine whether the cell is healthy or diseased.

In the example being disclosed, said threshold values have been chosen between 0 and 1.

In particular, the chosen threshold values are the following: 0,2, 0,4, 0,6 e 0,8.

Below is a table showing the results obtained by varying the threshold values.

| *TP* | *TN* | *FP* | *FN* | Valore di soglia | *fp* | *tp* |
|---|---|---|---|---|---|---|
| 79 | 471 | 3 | 20 | 0,8 | 0,006 | 0,79 |
| 80 | 469 | 4 | 20 | 0,6 | 0,008 | 0,8 |
| 80 | 468 | 5 | 20 | 0,4 | 0,010 | 0,8 |
| 82 | 463 | 9 | 19 | 0,2 | 0,019 | 0,81 |

In the table above:
*TP* indicates the number of cells recognized as diseased cells correctly identified by the method described above;
*TN* indicates the number of cells recognized as healthy cells correctly identified by the method described above;
*FP* indicates the number of cells recognized as healthy cells mistakenly identified as diseased cells by the method described above;
*FN* indicates the number of cells recognized as diseased cells mistakenly identified as healthy cells by the method described above;
*fp* indicates an estimate of the likelihood that the method described above mistakenly identifies as diseased cells the cells recognized as healthy cells, wherein $fp = \frac{FP}{FP + TN}$; and
*tp* indicates an estimate of the likelihood that the method described above correctly identifies healthy cells, wherein $tp = \frac{TP}{TP + FN}$.

The values shown in the table have been used to construct a respective confusion matrix for each predetermined threshold value and to construct a ROC curve concerning all the confusion matrices.

The figure 7 shows such a ROC curve.

The accuracy of the method described above to determine whether the cells are healthy cells or diseased cells is directly proportional to the area subtended by the ROC curve.

The area under the ROC curve is called AUC and measures the probability that the result of a test on a sick person randomly chosen from a group of sick people is different from (greater than) the result of a test on a healthy person randomly chosen by a group of healthy people.

In addition, several methods are known to estimate the area subtended by the ROC or AUC curve.

In particular, a known method for estimating the area subtended by the ROC or AUC curve provides for a numerical integration, for example by calculating different areas each of which is associated with a respective polygon subtended by the curve and then adding the area of all polygons.

The result of the sum of the areas of all polygons will provide a lower estimate of the real area subtended by the ROC or AUC curve.

In particular, it is possible to use a known method to interpret the value of the area subtended by the ROC or AUC curve, according to which:
if AUC<0,5, the method is not considered informative;
if 0,5<AUC≤0,7,the method is considered inaccurate;
if 0,7<AUC≤0,9, the method is considered moderately accurate;
if 0,9<AUC<1, the method is considered to be highly accurate;
if AUC=1 the method is considered perfect.

Regardless of the predetermined threshold value, the method is moderately accurate or highly accurate.

The method described above is accurate with respect to the predetermined threshold value and robust with respect to the choice of each predetermined threshold value.

In the example being disclosed, it is preferably that the predetermined threshold value is greater than 0,2 and more preferably greater than or equal to 0,8.

### Advantages

Advantageously, as said, the method object of the present invention allows to determine automatically if a cell shown in a nuclear fluorescence image obtained through a confocal microscope is a diseased cell, in particular a tumorous cell.

A second advantage is given by the fact through said method it is possible to distinguish diseased cells from healthy cells.

A further advantage is due to the reliability of the method.
The present invention has been described for illustrative, but not limitative purposes, according to its preferred embodiment, but it is to be understood that variations and/or modifications can be carried out by a skilled in the art, without departing from the scope thereof, as defined according to enclosed claims.

### Bibliography

1) Uhler C, Shivashankar GV. Nuclear Mechanopathology and Cancer Diagnosis. Trends Cancer. 2018 Apr;4(4):320-331;
2) Radhakrishnan A, Damodaran K, Soylemezoglu AC, Uhler C, Shivashankar GV. Machine Learning for Nuclear Mechano-Morphometric Biomarkers in Cancer Diagnosis. Sci Rep. 2017 Dec 20;7(1):17946. doi: 10.1038/s41598-017-17858-1;
3) Dongmei Guo, Tianshuang Qiu, Jie Bian, Li Zhang. A computer-aided diagnostic system to discriminate SPIO-enhanced magnetic resonance hepatocellular carcinoma by a neural network classifier. Computerized medical imaging and graphics: the official journal of the Computerized Medical Imaging Society 33(8):588-92;
4) Mitrea, M. Platon (Lup 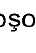 or), S. Nedevschi, P. Mitrea R. Brehar. Conference paper: 6th International Conference on Advancements of Medicine and Health Care through Technology; 17-20 October 2018, Cluj-Napoca, Romania, pp. 169-175. The Role of Convolutional Neural Networks in the Automatic Recognition of the Hepatocellular Carcinoma, Based on Ultrasound Images;
5) Yu-Dong Zhang, Zhengchao Dong, Xianq Joint multiple fully connected convolutional neural network with extreme learning machine for hepatocellular carcinoma nuclei grading. Computers in Biology and Medicine Volume 84, 1 May 2017, Pages 156-167.

## Claims

1. A computer-implemented method for determining whether at least one cell of body tissue shown in an nuclear fluorescence image acquired through a confocal microscope is a diseased cell, in particular a tumorous cell, wherein said fluorescence is obtained through DNA intercalating agent, said method comprising the following steps:
A) segmenting said nuclear fluorescence image to obtain at least one segmented image I_{S} referred to a nucleus (C) of a single cell;
B) inserting said at least one segmented image I_{S} referred to said nucleus (C) of said cell on a background having a predetermined colour to obtain at least one reference image (I_{REF}), in which a reference matrix M_{REF} of dimensions M x N is associated with said reference image (I_{REF}) and to each pixel of said reference image (I_{REF}) corresponds a respective number in said reference matrix M_{REF} whose value is the respective grey level of said pixel;
C) applying a discrete Wavelet transform to said reference matrix M_{REF} to obtain
a further first matrix M₁ associated with a further first image (I₁) which is an image of the nucleus (C) of the cell shown in said reference image (I_{REF}), in which said further first image (I₁) has a resolution lower than the resolution of said reference image (I_{REF}),
a further second matrix M₂ associated with a further second image (I₂) referred to the horizontal components of said reference image (I_{REF}),
a further third matrix M₃ associated with a further third image (I₃) referred to the vertical components of said reference image (I_{REF}),
a further fourth matrix M₄ associated with a further fourth image (I₄) referred to the diagonal components of said reference image (I_{REF}),
in which each of said further matrices M₁,M₂,M₃,M₄ is a matrix of dimensions M' x N' and a pixel in position x, y of each further image (I₁,I₂,I₃,I₄) corresponds to a respective number in position x,y inside a respective further matrix M₁,M₂,M₃,M₄ and the value of said number is the respective grey level of said pixel;
D) creating a respective Co-occurrence matrix *P*₁(*i, j*|Δ*x,* Δ*y)*, *P*₂(*i, j*|Δ*x,* Δ*y*), *P*₃(*i, j*|Δ*x,* Δ*y*), *P*₄(*i, j*|Δ*x,* Δ*y*) for each of said further four matrices M₁,M₂,M₃,M₄, in which each Co-occurrence matrix contains information on the nucleus (C) of said cell in terms of texture, magnitude and morphology, and is a matrix of dimensions G x G, where G is the number of grey levels and each of said Co-occurrence matrices *P*₁(*i, j*|Δ*x,* Δ*y*)*, P*₂(*i, j*|Δ*x,* Δ*y*), *P*₃(*i, j*|Δ*x,* Δ*y*), *P*₄(*i, j*|Δ*x,* Δ*y*) has in a respective position i,j the number of pairs of elements of a respective further matrix M₁,M₂,M₃,M₄, in which each pair of elements is associated with a respective pair of pixels and is formed by a first element associated with a first pixel of said pair of pixels having a grey level equal to i and by a second element associated with a second pixel of said pair of pixels, different from said first pixel and having a grey level equal to j, where i is a positive integer i = 0...G and j is a positive integer j = 0...G;
E) calculating a plurality of statistical functions SF₁,SF₂...SF_{N} starting from each Co-occurrence matrix *P*₁(*i, j*|Δ*x,* Δ*y*), *P*₂(*i, j*|Δ*x,* Δ*y*), *P*₃(*i, j*|Δ*x,* Δ*y*),*P*₄(*i, j*|Δ*x,* Δ*y*) to characterize at least the texture of the nucleus (C) of said cell, in which each statistical function SF₁,SF₂...SF_{N} is associated with a respective parameter of a further image of the nucleus (C) of said cell and the result of each statistical function SF₁,SF₂...SF_{N} is a respective number, so that a vector V of numbers comprising four sub-vectors v₁,v₂,v₃,v₄, is associated with the nucleus (C) of said cell, each sub-vector being associated with a respective further image (I₁,I₂,I₃,I₄) and containing k elements in which k is the number of said statistical functions,
F) supplying as input to a predetermined neural network (NN) the results of said statistical functions SF₁,SF₂...SF_{N}, in which said predetermined neural network (NN) comprises an output layer with at least a first output node (N_{OUT1}) and is configured to provide as output a first numerical value between 0 and 1 at said first output node (N_{OUT1}),
G) comparing said first numerical value with a predetermined threshold,
H) determining whether said cell is a diseased cell, in particular a tumorous cell, when said first numerical value is greater than said predetermined threshold.

2. Method according to the preceding claim, wherein
step G comprises the sub-step G1 of approximating said first numerical value to 1, when said first numerical value is greater than said predetermined threshold, and to 0, when said first numerical value is less than or equal to said predetermined threshold,
wherein
with reference to step H, the nucleus (C) of said cell is the nucleus of a diseased cell, in particular a tumorous cell, when said first numerical value is approximated to 1.

3. Method according to any one of the previous claims, wherein
said output layer comprises a second output node (N_{OUT2}),
wherein
with reference to step F, said predetermined neural network (NN) is configured to provide as output a second numerical value between 0 and 1 at said second output node (N_{OUT2}),
wherein
step G comprises comparing said second numerical value with said predetermined threshold,
wherein
step H allows to determine whether said cell is a diseased cell, in particular a tumorous cell, when said second numerical value is less than or equal to said predetermined threshold, as well as when said first numerical value is greater than said predetermined threshold.

4. Method according to claim 2 and claim 3, wherein
step G comprises the sub-step G2 of approximating said second numerical value to 1, when said second numerical value is greater than said predetermined threshold, and to 0, when said second numerical value is less than or equal to said predetermined threshold,
wherein
with reference to step H, the nucleus (C) of said cell is nucleus of a diseased cell, in particular a tumorous cell, when said second numerical value is approximated to 0, as well as when said first numerical value is approximated to 1.

5. Method according to any one of the previous claims, wherein said plurality of statistical functions comprises:
- a first statistical function SF₁ named Inverse Difference Moment to indicate a homogeneity in the distribution of grey levels: ${IDM}_{z} = {\sum }_{i = 1}^{N ′} {\sum }_{j = 1}^{N ′} \frac{{P}_{z} \left(\left.i, j\right|Δx,Δy\right)}{{\left|i-j\right|}^{2}} i \neq j$ where
*P_{z}*(*i, j*|Δ*x,* Δ*y*) is the Co-occurrence matrix;
i is a number that identifies the grey level associated with said first pixel of a further image;
j is a number that identifies the grey level of said second pixel of said further image, in which said second pixel is different from said first pixel and is positioned next to said first pixel or at a predetermined distance from said first pixel;
- a second statistical function SF₂ named Energy to indicate a homogeneity in the structure of the texture of the nucleus (C) of the cell: ${EN}_{z} = {\sum }_{i = 1}^{N ′} {\sum }_{j = 1}^{N ′} {{P}_{z}}^{2} \left(\left.i, j\right|Δx,Δy\right)$ where
*P_{z}*(*i, j*|Δ*x,* Δ*y*) is the Co-occurrence matrix;
- a third statistical function named Norm Entropy to take into account the level of clutter between pixels: ${NE}_{z} = \frac{{\sum }_{i = 1}^{N ′} {\sum }_{j = 1}^{N ′} {\left|{P}_{z}\left(\left.i, j\right|Δx,Δy\right)\right|}^{p}}{N ′}$ where
*P_{z}*(*i, j*|Δ*x,* Δ*y*) is the Co-occurrence matrix;
*p* = 1,5
- a fourth statistical function SF₄ named Local Homogeneity to indicate the presence of homogeneous areas or non-homogeneous areas: ${LO}_{z} = {\sum }_{i = 1}^{N ′} {\sum }_{j = 1}^{N ′} \frac{{P}_{z} \left(\left.i, j\right|Δx,Δy\right)}{1 + {\left(i-j\right)}^{2}}$ where
*P_{z}*(*i, j*|Δ*x,* Δ*y*) is the Co-occurrence matrix;
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel;
- a fifth statistical function SF₅ named Cluster Shade to indicate an asymmetry of the Co-occurrence matrix: ${CS}_{z} = {\sum }_{i = 1}^{N ′} {\sum }_{j = 1}^{N ′} {\left(i-{Px}_{z}+j-{Py}_{z}\right)}^{3} {P}_{z} \left(\left.i, j\right|Δx,Δy\right)$ where
*P_{z}*(*i, j*|Δ*x, Δy)* is the Co-occurrence matrix; ${Px}_{z} = {\sum }_{i , j = 1}^{N ′} iP \left(\left.i, j\right|Δx,Δy\right)$ ${Py}_{z} = {\sum }_{i , j = 1}^{N ′} jP \left(\left.i, j\right|Δx,Δy\right)$
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel;
- a sixth statistical function SF₆ named Cluster Prominence to indicate a further asymmetry of the Co-occurrence matrix: ${CP}_{z} = {\sum }_{i = 1}^{N ′} {\sum }_{j = 1}^{N ′} {\left(i-{Px}_{z}+j-{Py}_{z}\right)}^{4} {P}_{z} \left(\left.i, j\right|Δx,Δy\right)$ where
*P_{z}*(*i, j*|Δ*x,* Δ*y*) is the Co-occurrence matrix; ${Px}_{z} = {\sum }_{i , j = 1}^{N ′} iP \left(\left.i, j\right|Δx,Δy\right)$ ${Py}_{z} = {\sum }_{i , j = 1}^{N ′} jP \left(\left.i, j\right|Δx,Δy\right)$
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel;
- a seventh statistical function SF₇ named Contrast to identify the difference in intensity between two grey levels, a first grey level associated with said first pixel and a second grey level associated with said second pixel: ${CO}_{z} = {\sum }_{i = 1}^{N ′} {\sum }_{j = 1}^{N ′} {\left(i-j\right)}^{2} {P}_{z} \left(\left.i, j\right|Δx,Δy\right)$ where
*P_{z}*(*i, j*|Δ*x, Δy*) is the Co-occurrence matrix;
*i* is a number that identifies the grey level associated with said first pixel of a further image;
*j* is a number that identifies the grey level of said second pixel of said further image, in which said second pixel is different from said first pixel and is positioned next to said first pixel or at a predetermined distance from said first pixel.

6. Method according to the preceding claim, wherein said plurality of statistical functions comprises two further statistical functions to characterize the magnitude and the morphology of the nucleus (C) of said cell, respectively:
- a eighth statistical function SF₈ named Extension to offer an estimate of the magnitude of the nucleus (C) of the cell through a number of pixel pairs, each of which is formed from a respective first pixel and a respective second pixel, different from said first pixel and is positioned next to said first pixel, wherein the first pixel and the second pixel of each pixel pair have a grey level equal to 0: $EX = 1 / {P}_{z} \left(\left.i=1,j=1\right|Δx,Δy\right)$ where
*P_{z}*(*i* = *1, j =* 1|*Δx, Δy*) is the first element of the Co-occurrence matrix;
- a ninth statistical function SF₉ named EdgeLengthEstimate to offer an estimate of the perimeter of the nucleus of the cell (C) through a number of pixel pairs, each of which is formed by a respective first pixel and by a respective second pixel, different from said first pixel and is positioned next to said first pixel, wherein one of two pixels has a grey level equal to 0: $ELE = {\sum }_{i = 2}^{N} {P}_{z} \left(\left.i,j=1\right|Δx,Δy\right) + {\sum }_{j = 2}^{N} {P}_{z} \left(\left.i=1,j\right|Δx,Δy\right)$ where
*P_{z}*(*i, j =* 1|*Δx, Δy)* con i ≠ 1 is the sum of the elements of the first row of the Co-occurrence matrix;
*P_{z}*(*i* = 1, *j*|Δ*x*,Δ*y*) con *j* ≠ 1 is the sum of the elements of the first column of the Co-occurrence matrix.

7. Method according to any one of previous claims, wherein said predetermined neural network (NN) comprises an input layer and said input layer comprises a number of input nodes (N_{IN1},N_{IN2}...N_{INF}) equal to the total number of statistical functions SF₁,SF₂...SF_{N} calculated for each matrix of Co-occurrence.

8. Method according to any one of previous claims, wherein said predetermined neural network (NN) comprises at least one hidden layer, in which said hidden layer comprises at least one respective first hidden node (N_{N1}).

9. Method according to the previous claim, wherein said hidden layer comprises ten hidden nodes (N_{N1},N_{N2}...N_{N10}).

10. Method according to any one of previous claims, wherein said predetermined colour of said background is the black colour.

11. Method according to any one of the previous claims, wherein said DNA intercalating agent is a fluorochrome, preferably the DRAQ5.

12. System for determining whether at least one cell (C) of body tissue shown in a nuclear fluorescence image acquired through a confocal microscope is a diseased cell, in particular a tumorous cell, wherein said fluorescence is obtained through a DNA intercalating agent, said system comprising:
- storage means (SM) in which said nuclear fluorescence image and a predetermined threshold are stored,
- a predetermined neural network (NN) comprising an output layer, wherein said output layer comprises at least one first output node (N_{OUT1}), and configured to provide as output a first numerical value between 0 and 1 at said first output node (N_{OUT1}),
- a logic control unit (U), connected to said storage means (SM) and to said predetermined neural network (NN) and configured to:
∘ segment said nuclear fluorescence image to obtain at least one segmented image I_{S} referred to a nucleus (C) of a single cell;
∘ insert said at least one segmented image I_{S} referred to said nucleus (C) of said cell on a background having a predetermined colour to obtain at least one reference image (I_{REF}), in which a reference matrix M_{REF} of dimensions M x N is associated with said reference image (I_{REF}) and to each pixel of said reference image (I_{REF}) corresponds a respective number in said reference matrix M_{REF} whose value is the respective grey level of said pixel;
∘ apply a discrete Wavelet transform to said reference matrix MREF to obtain:
a further first matrix M₁ associated with a further first image (I₁) which is an image of the nucleus (C) of the cell shown in said reference image (I_{REF}), in which said further first image (I₁) has a resolution lower than the resolution of said reference image (I_{REF}),
a further second matrix M₂ associated with a further second image (I₂) referred to the horizontal components of said reference image (IREF),
a further third matrix M₃ associated with a further third image (I₃) referred to the vertical components of said reference image (I_{REF}),
a further fourth matrix M₄ associated with a further fourth image (I₄) referred to the diagonal components of said reference image (I_{REF}),
in which each of said further matrices M₁,M₂,M₃,M₄ is a matrix of dimensions M' x N' and a respective number in position x,y inside a respective further matrix M₁,M₂,M₃,M₄ corresponds a pixel in position x,y of each further image (I₁,I₂,I₃,I₄) and the value of said number is the respective grey level of said pixel;
∘ create a respective Co-occurrence matrix *P*₁(*i, j*|Δ*x, Δ*y), *P*₂(*i, j*|*Δx,* Δ*y*), *P*₃(*i, j*|Δ*x, Δ*y), *P*₄*(i, j*|*Δx,Δy*) for each of said further four matrices M₁,M₂,M₃,M₄, in which each Co-occurrence matrix contains information on the nucleus (C) of said cell in terms of texture, magnitude and morphology, and is a matrix of dimensions G x G, where G is the number of grey levels and each of said Co-occurrence matrices *P*₁(*i,j*|*Δₓ, Δy*)*, P₂*(*i, j*|*Δx, Δy*)*, P*₃(*i, j*|*Δx, Δ*y), *P*₄(*i, j*|Δ*x,* Δy*)* has in a respective position i,j the number of pairs of elements of a respective further matrix M₁,M₂,M₃,M₄, in which each pair of elements is associated with a respective pair of pixels and is formed by a first element associated with a first pixel of said pair of pixels having a grey level equal to i and by a second element associated with a second pixel of said pair of pixels, different from said first pixel and having a grey level equal to j, where i is a positive integer i = 0...G and j is a positive integer j = 0...G;
∘ calculate a plurality of statistical functions SF₁,SF₂...SF_{N} starting from each Co-occurrence matrix *P*₁(*i, j*|Δ*x,* Δy), *P₂(i, j*|Δ*x,* Δy)*, P*₃(*i, j*|Δ*x,* Δy), *P*₄(*i, j*|Δ*x,* Δy) to characterize at least the texture of the nucleus (C) of said cell, in which each statistical function SF₁,SF₂...SF_{N} is associated with a respective parameter of a further image of the nucleus (C) of said cell and the result of each statistical function SF₁,SF₂...SF_{N} is a respective number, so that a vector V of numbers comprising four sub-vectors v₁,v₂,v₃,v₄, is associated with the nucleus (C) of said cell, each sub-vector being associated with a respective further image (I₁,I₂,I₃,I₄) and containing k elements in which k is the number of said statistical functions,
∘ supply as input to said predetermined neural network (NN) the results of said statistical functions SF₁,SF₂...SF_{N} to obtain a first numerical value between 0 and 1 at said first output node (N_{OUT1}),
∘ compare said first numerical value with said predetermined threshold stored in said storage means (SM),
∘ determine whether said cell is a diseased cell, in particular a tumorous cell, when said first numerical value is greater than said predetermined threshold.

13. System according to the previous claim, wherein said logic control unit is configured to approximate said first numerical value to 1, when said first numerical value is greater than said predetermined threshold, and to 0, when said first numerical value is less than or equal to said predetermined threshold, and to determine whether the nucleus (C) of said cell is the nucleus of a diseased cell, in particular a tumorous cell, when said first numerical value is approximated to 1.

14. System according to any one of claims 12-13, wherein
said output layer comprises a second output node (N_{OUT2}),
wherein
said predetermined neural network (NN) is configured to provide as output a second numerical value between 0 and 1 at said second output node (N_{OUT2}),
wherein
said logic control unit (U) is configured to compare said second numerical value with said predetermined threshold and to determine whether the nucleus (C) of said cell is the nucleus of a diseased cell, in particular a tumorous cell, when said second numerical value is less than or equal to said predetermined threshold, as well as when said first numerical value is greater than said predetermined threshold.

15. System according to the claim 14, when depending from claim 13, wherein said logic control unit (U) is configured to approximate said second numerical value to 1, when said second numerical value is greater than said predetermined threshold, and to 0, when said second numerical value is less than or equal to said predetermined threshold, and to determine whether the nucleus (C) of said cell is the nucleus of a diseased cell, in particular a tumorous cell, when said second numerical value is approximated to 0, as well as when said first numerical value is approximated to 1.

16. Computer program, comprising code means configured in such a way that, when executed on a computer, perform the steps of the method according to any one of claims 1-11.

17. Computer-readable storage medium comprising instructions which, when executed by a computer, cause the computer to carry out the steps of the method according any one of claims 1-11.

## Patentansprüche

1. Computerimplementiertes Verfahren zur Bestimmung, ob mindestens eine Zelle von Körpergewebe, die in einem mittels eines Konfokalmikroskops aufgenommenen Kernfluoreszenzbild dargestellt ist, eine erkrankte Zelle, insbesondere eine Tumorzelle, ist, wobei die Fluoreszenz durch einen DNA-Interkalator erzeugt wird, wobei das Verfahren die folgenden Schritte umfasst:
A) Segmentierung des genannten Kernfluoreszenzbildes, um mindestens ein segmentiertes Bild zu erhalten, das sich auf einen Zellkern (C) einer einzelnen Zelle bezieht;
B) Einfügen des mindestens einen segmentierten Bildes Iₛ in Bezug auf den Zellkern (C) vor einem Hintergrund mit einer vorgegebenen Farbe, um mindestens ein Referenzbild (I_{REF}) zu erhalten, wobei dem Referenzbild (I_{REF}) eine Referenzmatrix M_{REF} mit den Abmessungen M x N dem Referenzbild (I_{REF}) eine entsprechende Zahl in der Referenzmatrix M_{REF} zugeordnet ist, deren Wert dem jeweiligen Grauwert des Pixels entspricht;
C) Anwenden einer diskreten Wavelet-Transformation auf die genannte Referenzmatrix M_{REF}, um
eine weitere erste Matrix M₁, die einem weiteren ersten Bild (I₁) zugeordnet ist, bei dem es sich um ein Bild des Zellkerns (C) der in dem genannten Referenzbild (I_{REF}) dargestellten Zelle handelt, wobei das genannte weitere erste Bild (I₁) eine geringere Auflösung aufweist als das Referenzbild (I_{REF}),
eine weitere zweite Matrix M₂, die einem weiteren zweiten Bild (I₂) zugeordnet ist, bezogen auf die horizontalen Komponenten des genannten Referenzbildes (I_{REF}),
eine weitere dritte Matrix M₃, die einem weiteren dritten Bild (I₃) zugeordnet ist, bezogen auf die vertikalen Komponenten des genannten Referenzbildes (I_{REF}),
eine weitere vierte Matrix M₄, die einem weiteren vierten Bild (I₄) zugeordnet ist, bezogen auf die Diagonalkomponenten des genannten Referenzbildes (I_{REF}),
wobei jede der weiteren Matrizen M₁,M₂,M₃,M₄ eine Matrix der Dimensionen M' x N' ist und ein Pixel an der Position x, y jedes weiteren Bildes (I₁,I₂,I₃,I₄) einer jeweiligen Zahl an der Position x,y innerhalb einer jeweiligen weiteren Matrix M₁,M₂,M₃,M₄, und der Wert dieser Zahl ist der jeweilige Grauwert des Pixels;
D) Erstellen einer entsprechenden Ko-Auftrittsmatrix *P*₁(*i*,*j*|Δ*x,*Δ*y*), *P*₂(*i*,*j*|Δ*x,*Δy)*, P*₃(*i,j*|Δ*x,*Δ*y*)*, P*₄(i*,j*|Δ*x,*Δy) für jede der weiteren vier Matrizen M₁,M₂,M₃,M₄, wobei jede Ko-Auftrittsmatrix Informationen über den Zellkern (C) der genannten Zelle hinsichtlich Textur, Größe und Morphologie enthält und eine Matrix der Dimensionen G × G ist, wobei G die Anzahl der Graustufen ist und jede der genannten Ko-Auftrittsmatrizen *P*₁(*i,j*|Δ*x,*Δy), *P*₂(*i,j*|Δ*x,Δ*y), *P*₃(*i,j*|Δ*x,*Δy)*, P*₄(*i,j*|Δ*x*,Δy) an der jeweiligen Position i,j die Anzahl der Elementpaare einer jeweiligen weiteren Matrix M₁,M₂,M₃,M₄, in der jedes Elementpaar einem jeweiligen Pixelpaar zugeordnet ist und aus einem ersten Element, das einem ersten Pixel des genannten Pixelpaares mit einem Grauwert gleich i zugeordnet ist, und einem zweiten Element gebildet wird, das einem zweiten Pixel des genannten Pixelpaares zugeordnet ist, das sich von dem genannten ersten Pixel unterscheidet und einen Grauwert gleich j aufweist, wobei i eine positive ganze Zahl i = 0...G und j eine positive ganze Zahl j = 0...G ist;
E) Berechnen einer Vielzahl von statistischen Funktionen SF₁, SF₂... SF_{N}, wobei jede Ko-Auftrittshäufigkeit ausgehend von den Matrizen *P*₁(*i*,*j*|Δ*x,*Δ*y*), *P*₂(*i*,*j*|Δ*x,*Δ*y*), *P*₃(*i,j*|Δ*x,*Δ*y*)*, P*₄(*i,j*|Δ*x,*Δy), um zumindest die Textur des Zellkerns (C) der genannten Zelle zu charakterisieren, wobei jede statistische Funktion SF_{1,}SF₂...SF_{N} mit einem jeweiligen Parameter eines weiteren Bildes des Zellkerns (C) der genannten Zelle assoziiert ist und das Ergebnis jeder statistischen Funktion SF₁,SF₂...SF_{N} eine jeweilige Zahl ist, so dass ein Vektor V aus Zahlen, der vier Teilvektoren v₁,v₂,v₃ und v₄, dem Zellkern (C) der genannten Zelle zugeordnet ist, wobei jeder Teilvektor einem jeweiligen weiteren Bild (I₁,I₂,I₃,I₄) zugeordnet ist und k Elemente enthält, wobei k die Anzahl der genannten statistischen Funktionen ist,
F) Zuführung der Ergebnisse der statistischen Funktionen SF₁, SF₂...SF_{N} als Eingabe an ein vorbestimmtes neuronales Netzwerk (NN), wobei das vorbestimmte neuronale Netzwerk (NN) eine Ausgabeschicht mit mindestens einem ersten Ausgabeknoten (N_{OUT1}) umfasst und so konfiguriert ist, dass es am ersten Ausgabeknoten (N_{OUT1}) einen ersten numerischen Wert zwischen 0 und 1 ausgibt,
G) Vergleichen des ersten Zahlenwerts mit einem vorgegebenen Schwellenwert,
H) Feststellen, ob es sich bei der Zelle um eine erkrankte Zelle, insbesondere um eine Tumorzelle, handelt, wenn der erste numerische Wert größer ist als der vorgegebene Schwellenwert.

2. Verfahren nach dem vorstehenden Anspruch, wobei
Schritt G umfasst den Teilschritt G1, bei dem der erste numerische Wert auf 1 annähert, wenn der erste numerische Wert größer als der vorgegebene Schwellenwert ist, und auf 0, wenn der erste numerische Wert kleiner oder gleich dem vorgegebenen Schwellenwert ist,
wobei
In Bezug auf Schritt H ist der Zellkern (C) der genannten Zelle der Zellkern einer erkrankten Zelle, insbesondere einer Tumorzelle, wenn der genannte erste Zahlenwert annähernd 1 beträgt.

3. Verfahren nach einem der vorstehenden Ansprüche, wobei
wobei die Ausgangsschicht einen zweiten Ausgangsknoten (N_{OUT2}) umfasst,
wobei
unter Bezugnahme auf Schritt F ist das vorbestimmte neuronale Netzwerk (NN) so konfiguriert, dass es am zweiten Ausgangsknoten (N_{OUT2}) einen zweiten numerischen Wert zwischen 0 und 1 als Ausgangssignal liefert,
wobei
Schritt G umfasst den Vergleich des zweiten Zahlenwerts mit dem vorgegebenen Schwellenwert, wobei
In Schritt H lässt sich feststellen, ob es sich bei der betreffenden Zelle um eine erkrankte Zelle, insbesondere um eine Tumorzelle, handelt, wenn der zweite Zahlenwert kleiner oder gleich dem vorgegebenen Schwellenwert ist sowie wenn der erste Zahlenwert größer als der vorgegebene Schwellenwert ist.

4. Verfahren nach Anspruch 2 und Anspruch 3, wobei
Schritt G umfasst den Teilschritt G2, bei dem der zweite numerische Wert auf 1 annähert, wenn der zweite numerische Wert größer als der vorgegebene Schwellenwert ist, und auf 0, wenn der zweite numerische Wert kleiner oder gleich dem vorgegebenen Schwellenwert ist,
wobei
In Bezug auf Schritt H ist der Zellkern (C) der genannten Zelle der Zellkern einer erkrankten Zelle, insbesondere einer Tumorzelle, sowohl wenn der zweite Zahlenwert gegen 0 tendiert, als auch wenn der erste Zahlenwert gegen 1 tendiert.

5. Verfahren nach einem der vorstehenden Ansprüche, wobei die Vielzahl statistischer Funktionen umfasst:
- eine erste statistische Funktion SF₁, die als Inverses Differenzmoment bezeichnet wird und die Homogenität der Graustufenverteilung angibt: ${IDM}_{z} = {\sum }_{i = 1}^{N ′} {\sum }_{j = 1}^{N ′} \frac{{P}_{z} \left(\left.i, j\right|Δx,Δy\right)}{{\left|i-j\right|}^{2}} i \neq j$ wobei
*P_{z}*(*i*,*j*|Δ*x*,Δ*y*) ist die Ko-Auftrittsmatrix;
*i* ist eine Zahl, die den Grauwert identifiziert, der dem ersten Pixel eines weiteren Bildes zugeordnet ist; j ist eine Zahl, die den Grauwert des zweiten Pixels des weiteren Bildes angibt, wobei sich das zweite Pixel vom ersten Pixel unterscheidet und sich neben dem ersten Pixel oder in einem vorgegebenen Abstand zum ersten Pixel befindet.
- eine zweite statistische Funktion SF₂ mit der Bezeichnung "Energie", die auf eine Homogenität in der Struktur der Textur des Zellkerns (C) hinweist: ${EN}_{z} = {\sum }_{i = 1}^{N ′} {\sum }_{j = 1}^{N ′} {{P}_{z}}^{2} \left(\left.i, j\right|Δx,Δy\right)$ wobei
*P_{z}*(*i*,*j*|Δ*x*,Δ*y*) ist die Ko-Auftrittsmatrix;
- eine dritte statistische Funktion SF₃ namens "Norm-Entropie", um den Grad der Unordnung zwischen den Pixeln zu berücksichtigen: ${NE}_{z} = \frac{{\sum }_{i = 1}^{N ′} {\sum }_{j = 1}^{N ′} {\left|{P}_{z}\left(\left.i, j\right|Δx,Δy\right)\right|}^{p}}{N ′}$ wobei
*P_{z}*(*i,j*|Δ*x,*Δ*y*) ist die Ko-Auftrittsmatrix;
*p* = 1, 5
- eine vierte statistische Funktion SF₄ namens "Lokale Homogenität", die das Vorhandensein homogener oder inhomogener Bereiche anzeigt: ${LO}_{z} = {\sum }_{i = 1}^{N ′} {\sum }_{j = 1}^{N ′} \frac{{P}_{z} \left(\left.i, j\right|Δx,Δy\right)}{1 + {\left(i-j\right)}^{2}}$ wobei
*P_{z}*(*i*,*j*|Δ*x*,Δ*y*) ist die Ko-Auftrittsmatrix;
i ist eine Zahl, die den Grauwert identifiziert, der dem ersten Pixel eines weiteren Bildes zugeordnet ist; *j* ist eine Zahl, die den Grauwert des zweiten Pixels des weiteren Bildes angibt, wobei sich das zweite Pixel vom ersten Pixel unterscheidet und neben dem ersten Pixel oder in einem vorgegebenen Abstand zum ersten Pixel angeordnet ist;
- eine fünfte statistische Funktion SF₅ namens "Cluster Shade", die eine Asymmetrie der Ko-Auftrittsmatrix anzeigt: ${CS}_{z} = {\sum }_{i = 1}^{N ′} {\sum }_{j = 1}^{N ′} {\left(i-{Px}_{z}+j-{Py}_{z}\right)}^{3} {P}_{z} \left(\left.i, j\right|Δx,Δy\right)$ wobei
*P_{z}*(*i,j*|Δ*x,*Δ*y*) ist die Ko-Auftrittsmatrix; ${Px}_{z} = {\sum }_{i , j = 1}^{N ′} iP \left(\left.i, j\right|Δx,Δy\right)$ ${Py}_{z} = {\sum }_{i , j = 1}^{N ′} jP \left(i,j\left|Δx,Δy\right.\right)$
*i* ist eine Zahl, die den Grauwert identifiziert, der dem ersten Pixel eines weiteren Bildes zugeordnet ist; *j* ist eine Zahl, die den Grauwert des zweiten Pixels des weiteren Bildes angibt, wobei sich das zweite Pixel vom ersten Pixel unterscheidet und neben dem ersten Pixel oder in einem vorgegebenen Abstand zum ersten Pixel angeordnet ist;
- eine sechste statistische Funktion SF₆ namens "Cluster Prominence", die eine weitere Asymmetrie der Ko-Auftrittsmatrix anzeigt: ${CP}_{z} = {\sum }_{i = 1}^{N ′} {\sum }_{j = 1}^{N ′} {\left(i-{Px}_{z}+j-{Py}_{z}\right)}^{4} {P}_{z} \left(i,j\left|Δx,Δy\right.\right)$ wobei
*P_{z}*(*i,j*|Δ*x*,Δ*y*) ist die Ko-Auftrittsmatrix; ${Px}_{z} = {\sum }_{i , j = 1}^{N ′} iP \left(i,j\left|Δx,Δy\right.\right)$ ${Py}_{z} = {\sum }_{i , j = 1}^{N ′} jP \left(i,j\left|Δx,Δy\right.\right)$
*i* ist eine Zahl, die den Grauwert identifiziert, der dem ersten Pixel eines weiteren Bildes zugeordnet ist; *j* ist eine Zahl, die den Grauwert des zweiten Pixels des weiteren Bildes angibt, wobei sich das zweite Pixel vom ersten Pixel unterscheidet und neben dem ersten Pixel oder in einem vorgegebenen Abstand zum ersten Pixel angeordnet ist;
- eine siebte statistische Funktion SF₇ namens "Contrast", um den Intensitätsunterschied zwischen zwei Graustufen zu ermitteln, wobei die erste Graustufe dem ersten Pixel und die zweite Graustufe dem zweiten Pixel zugeordnet ist: ${CO}_{z} = {\sum }_{i = 1}^{N ′} {\sum }_{j = 1}^{N ′} {\left(i-j\right)}^{2} {P}_{z} \left(i,j\left|Δx,Δy\right.\right)$ wobei
*P_{z}*(*i*,*j*|Δ*x*,Δ*y*) ist die Ko-Auftrittsmatrix;
*i* ist eine Zahl, die den Grauwert identifiziert, der dem ersten Pixel eines weiteren Bildes zugeordnet ist; *j* ist eine Zahl, die den Grauwert des zweiten Pixels des weiteren Bildes angibt, wobei sich das zweite Pixel vom ersten Pixel unterscheidet und sich neben dem ersten Pixel oder in einem vorgegebenen Abstand zum ersten Pixel befindet.

6. Verfahren nach dem vorstehenden Anspruch, wobei die Vielzahl statistischer Funktionen zwei weitere statistische Funktionen umfasst, um die Größe bzw. die Morphologie des Zellkerns (C) der Zelle zu charakterisieren:
- eine achte statistische Funktion SF₈ mit der Bezeichnung "Extension", die eine Schätzung der Größe des Zellkerns (C) anhand einer Reihe von Pixelpaaren liefert, von denen jedes aus einem jeweiligen ersten Pixel und einem jeweiligen zweiten Pixel gebildet wird, wobei sich das zweite Pixel von dem ersten Pixel unterscheidet und neben diesem angeordnet ist, wobei das erste und das zweite Pixel jedes Pixelpaares einen Grauwert von 0 aufweisen: $EX = 1 / {P}_{z} \left(i=1,j=1\left|Δx,Δy\right.\right)$ wobei
*P_{z}*(*i* = 1, *j* = 1|Δ*x,*Δ*y*) ist das erste Element der Ko-Auftrittsmatrix;
- eine neunte statistische Funktion SF₉ mit der Bezeichnung "Edge Length Estimate" (Kantenlängenschätzung), die eine Schätzung des Umfangs des Zellkerns (C) anhand einer Reihe von Pixelpaaren liefert, von denen jedes aus einem jeweiligen ersten Pixel und einem jeweiligen zweiten Pixel besteht, wobei sich das zweite Pixel vom ersten Pixel unterscheidet und neben diesem positioniert ist, wobei eines der beiden Pixel einen Grauwert von 0 aufweist: $ELE = {\sum }_{i = 2}^{N} {P}_{z} \left(i,j=1\left|Δx,Δy\right.\right) + {\sum }_{j = 2}^{N} {P}_{z} \left(i=1,j\left|Δx,Δy\right.\right)$ wobei
*P_{z}*(*i,j* = 1|Δx,Δy) mit *i* ≠ 1 ist die Summe der Elemente der ersten Zeile der Ko-Auftrittsmatrix;
*P_{z}(i* = 1, *j*|Δ*x*,Δ*y*) für *j* ≠ 1 ist die Summe der Elemente der ersten Spalte der Ko-Auftrittsmatrix.

7. Verfahren nach einem der vorstehenden Ansprüche, wobei das vorbestimmte neuronale Netz (NN) eine Eingabeschicht umfasst und die Eingabeschicht eine Anzahl von Eingabeknoten (N_{IN1}, N_{IN2}... N_{INF}) entspricht der Gesamtzahl der statistischen Funktionen SF₁,SF₂...SF_{N}, die für jede Ko-Auftrittsmatrix berechnet wurden.

8. Verfahren nach einem der vorstehenden Ansprüche, wobei das vorbestimmte neuronale Netzwerk (NN) mindestens eine verborgene Schicht umfasst, wobei die verborgene Schicht mindestens einen jeweiligen ersten verborgenen Knoten (N_{N1}) umfasst.

9. Verfahren nach dem vorstehenden Anspruch, wobei die verborgene Schicht zehn verborgene Knoten umfasst (N_{N1}, N_{N2}... N_{N10}).

10. Verfahren nach einem der vorstehenden Ansprüche, wobei die vorbestimmte Farbe des Hintergrunds die Farbe Schwarz ist.

11. Verfahren nach einem der vorstehenden Ansprüche, wobei das DNA-Interkalationsmittel ein Fluorochrom ist, vorzugsweise DRAQ5.

12. System zur Bestimmung, ob mindestens eine Zelle (C) von Körpergewebe, die in einem mittels eines Konfokalmikroskops aufgenommenen Kernfluoreszenzbild dargestellt ist, eine erkrankte Zelle, insbesondere eine Tumorzelle, ist, wobei die Fluoreszenz durch einen DNA-Interkalator erzeugt wird, wobei das System umfasst:
- Speichermittel (SM), in denen das Kernfluoreszenzbild und ein vorbestimmter Schwellenwert gespeichert sind,
- ein vorgegebenes neuronales Netzwerk (NN), das eine Ausgangsebene umfasst, wobei die Ausgangsebene mindestens einen ersten Ausgangsknoten (N_{OUT1}) umfasst und so konfiguriert ist, dass es an dem ersten Ausgangsknoten (N_{OUT1}) einen ersten numerischen Wert zwischen 0 und 1 als Ausgangssignal liefert,
- eine Logiksteuereinheit (U), die mit der Speichereinrichtung (SM) und dem vorbestimmten neuronalen Netzwerk (NN) verbunden ist und so konfiguriert ist, dass sie:
∘ das genannte nukleäre Fluoreszenzbild wird segmentiert, um mindestens ein segmentiertes Bild zu erhalten, das sich auf einen Zellkern (C) einer einzelnen Zelle bezieht;
∘ das mindestens eine segmentierte Bild Iₛ wird auf den Zellkern (C) der Zelle vor einem Hintergrund mit einer vorgegebenen Farbe projiziert, um mindestens ein Referenzbild (I_{REF}) zu erhalten, wobei eine Referenzmatrix M_{REF} der Dimensionen M x N mit dem Referenzbild (I_{REF}) verknüpft ist und jedem Pixel des Referenzbildes (I_{REF}) eine entsprechende Zahl in der Referenzmatrix M_{REF} zugeordnet ist, deren Wert dem jeweiligen Grauwert des Pixels entspricht;
∘eine diskrete Wavelet-Transformation auf die genannte Referenzmatrix MREF anwenden, um Folgendes zu erhalten:
eine weitere erste Matrix M₁, die einem weiteren ersten Bild (I₁) zugeordnet ist, bei dem es sich um ein Bild des Zellkerns (C) der in dem genannten Referenzbild (I_{REF}) dargestellten Zelle handelt, wobei das genannte weitere erste Bild (I₁) eine geringere Auflösung aufweist als das Referenzbild (I_{REF}),
eine weitere zweite Matrix M₂, die einem weiteren zweiten Bild (I₂) zugeordnet ist, bezogen auf die horizontalen Komponenten des genannten Referenzbildes (I_{REF}) ,
eine weitere dritte Matrix M₃, die einem weiteren dritten Bild (I₃) zugeordnet ist, bezogen auf die vertikalen Komponenten des genannten Referenzbildes (I_{REF}) ,
eine weitere vierte Matrix M₄, die einem weiteren vierten Bild (I₄) zugeordnet ist, bezogen auf die Diagonalkomponenten des genannten Referenzbildes (I_{REF}), wobei jede der genannten weiteren Matrizen M₁,M₂,M₃,M₄ eine Matrix der Dimensionen M' x N' ist und eine jeweilige Zahl an der Position x,y innerhalb einer jeweiligen weiteren Matrix M₁,M₂,M₃,M₄ einem Pixel an der Position x, y jedes weiteren Bildes (I₁,I₂,I₃,I₄) entspricht und der Wert dieser Zahl der jeweilige Grauwert des Pixels ist;
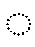 Erstellen einer entsprechenden Ko-Auftrittsmatrix bzw. von Auftretungsmatrizen *P*₁(*i,j*|Δ*x,*Δ*y*), *P*₂(*i,j*|Δ*x,*Δ*y*), *P*₃(*i,j*|Δ*x,*Δ*y*)*, P*₄*(i,j*|Δ*x,*Δ*y*) für jede der weiteren vier Matrizen M₁,M₂,M₃,M₄ zu erstellen, wobei jede Ko-Auftrittsmatrix Informationen über den Zellkern (C) der genannten Zelle in Bezug auf Textur, Größe und Morphologie enthält und eine Matrix der Dimensionen G x G ist, wobei G die Anzahl der Graustufen ist und jede der genannten Ko- - Auftrittsmatrizen *P*₁(*i,j*|Δ*x,*Δ*y*), *P*₂(*i,j*|Δ*x,*Δ*y*)*, P*₃(*i,j*|Δ*x,*Δ*y*)*, P*₄(*i,j*|Δ*x,*Δ*y*) an einer jeweiligen Position i,j die Anzahl der Elementpaare einer jeweiligen weiteren Matrix M₁,M₂,M₃,M₄, wobei jedes Elementpaar einem jeweiligen Pixelpaar zugeordnet ist und aus einem ersten Element, das einem ersten Pixel des genannten Pixelpaars mit einem Grauwert gleich i zugeordnet ist, und einem zweiten Element, das einem zweiten Pixel des genannten Pixelpaars zugeordnet ist, das sich von dem ersten Pixel unterscheidet und einen Grauwert gleich j aufweist, gebildet wird, wobei i eine positive ganze Zahl i = 0...G und j eine positive ganze Zahl j = 0...G ist;
∘ Berechnung einer Vielzahl von statistischen Funktionen SF₁,SF₂...SF_{N} ausgehend von jeder Ko-Auftrittsmatrix *P*₁(*i,j*|Δ*x,*Δ*y*), *P*₂(*i,j*|Δ*x,*Δ*y*), *P*₃(*i,j*|Δ*x,*Δ*y*), *P*₄(*i,j*|Δ*x,*Δ*y*), um zumindest die Textur des Zellkerns (C) der genannten Zelle zu charakterisieren, wobei jede statistische Funktion SF₁,SF₂...SF_{N} mit einem jeweiligen Parameter eines weiteren Bildes des Zellkerns (C) der genannten Zelle assoziiert ist und das Ergebnis jeder statistischen Funktion SF₁,SF₂...SF_{N} eine jeweilige Zahl ist, so dass ein Vektor V aus Zahlen, der vier Teilvektoren v₁,v₂,v₃ und v₄, dem Zellkern (C) der genannten Zelle zugeordnet ist, wobei jeder Teilvektor einem jeweiligen weiteren Bild (I₁,I₂,I₃,I₄) zugeordnet ist und k Elemente enthält, wobei k die Anzahl der genannten statistischen Funktionen ist,
∘ die Ergebnisse der statistischen Funktionen SF₁,SF₂...SF_{N} als Eingabe in das vorbestimmte neuronale Netzwerk (NN) einspeisen, um am ersten Ausgangsknoten (N_{OUT1}) einen ersten numerischen Wert zwischen 0 und 1 zu erhalten,
∘ den ersten numerischen Wert mit dem in der Speichereinrichtung (SM) gespeicherten vorgegebenen Schwellenwert vergleichen,
∘ feststellen, ob es sich bei der genannten Zelle um eine erkrankte Zelle, insbesondere um eine Tumorzelle, handelt, wenn der genannte erste numerische Wert größer ist als der genannte vorbestimmte Schwellenwert.

13. System nach dem vorstehenden Anspruch, wobei die Logiksteuereinheit so konfiguriert ist, dass sie den ersten numerischen Wert auf 1 annähert, wenn der erste numerische Wert größer als der vorbestimmte Schwellenwert ist, und auf 0, wenn der erste numerische Wert kleiner oder gleich dem vorbestimmten Schwellenwert ist, und zu bestimmen, ob der Zellkern (C) der Zelle der Zellkern einer erkrankten Zelle, insbesondere einer Tumorzelle, ist, wenn der erste numerische Wert an 1 angenähert wird.

14. System gemäß einem der Ansprüche 12-13, wobei
wobei die Ausgangsschicht einen zweiten Ausgangsknoten (N_{OUT2}) umfasst,
wobei
das genannte vorbestimmte neuronale Netzwerk (NN) ist so konfiguriert, dass es am genannten zweiten Ausgangsknoten (N_{OUT2}) einen zweiten numerischen Wert zwischen 0 und 1 als Ausgangssignal liefert,
wobei
die Logiksteuereinheit (U) ist so ausgelegt, dass sie den zweiten numerischen Wert mit dem vorgegebenen Schwellenwert vergleicht und feststellt, ob der Zellkern (C) der Zelle der Zellkern einer erkrankten Zelle, insbesondere einer Tumorzelle, ist, wenn der zweite numerische Wert kleiner oder gleich dem vorgegebenen Schwellenwert ist, sowie wenn der erste numerische Wert größer als der vorgegebene Schwellenwert ist.

15. System nach Anspruch 14, wenn es auf Anspruch 13 basiert, wobei die Logiksteuereinheit (U) so konfiguriert ist, dass sie den zweiten numerischen Wert auf 1 annähert, wenn der zweite numerische Wert größer als der vorbestimmte Schwellenwert ist, und auf 0, wenn der zweite numerische Wert kleiner oder gleich dem vorbestimmten Schwellenwert ist, und zu bestimmen, ob der Zellkern (C) der Zelle der Zellkern einer erkrankten Zelle, insbesondere einer Tumorzelle, ist, wenn der zweite numerische Wert gegen 0 tendiert, sowie wenn der erste numerische Wert gegen 1 tendiert.

16. Computerprogramm, das Codemittel umfasst, die so konfiguriert sind, dass sie bei Ausführung auf einem Computer die Schritte des Verfahrens gemäß einem der Ansprüche 1-11 ausführen.

17. Computerlesbares Speichermedium, das Anweisungen enthält, die, wenn sie von einem Computer ausgeführt werden, den Computer veranlassen, die Schritte des Verfahrens gemäß einem der Ansprüche 1-11 auszuführen.

## Revendications

1. Procédé mis en œuvre par ordinateur permettant de déterminer si au moins une cellule de tissu corporel représentée sur une image de fluorescence nucléaire acquise à l'aide d'un microscope confocal est une cellule pathologique, en particulier une cellule tumorale, dans lequel ladite fluorescence est obtenue à l'aide d'un agent intercalant l'DNA, ledit procédé comprenant les étapes suivantes:
A) segmenter ladite image de fluorescence nucléaire afin d'obtenir au moins une image segmentée correspondant à un noyau (C) d'une cellule unique;
B) insérer ladite au moins une image segmentée Iₛ par rapport audit noyau (C) de ladite cellule sur un fond de couleur prédéterminée afin d'obtenir au moins une image de référence (I_{REF}), dans laquelle une matrice de référence M_{REF} de dimensions M x N est associée à ladite image de référence (I_{REF}) et à chaque pixel de ladite image de référence (I_{REF}) correspond un numéro respectif dans ladite matrice de référence M_{REF} dont la valeur est le niveau de gris respectif dudit pixel;
C) appliquer une transformation en ondelettes discrète à ladite matrice de référence M_{REF} afin d'obtenir
une autre première matrice M₁ associée à une autre première image (I₁) qui est une image du noyau (C) de la cellule représentée sur ladite image de référence (I_{REF}), dans laquelle ladite autre première image (I₁) a une résolution inférieure à celle de ladite image de référence (I_{REF}),
une deuxième matrice M₂ associée à une deuxième image (I₂) rapportée aux composantes horizontales de ladite image de référence (I_{REF}),
une troisième matrice M₃ associée à une troisième image (I₃) se rapportant aux composantes verticales de ladite image de référence (I_{REF}),
une quatrième matrice M₄ associée à une quatrième image (I₄) se rapportant aux composantes diagonales de ladite image de référence (I_{REF}),
dans laquelle chacune desdites autres matrices M₁,M₂,M₃,M₄ est une matrice de dimensions M'× N' et un pixel situé en position x, y de chaque image supplémentaire (I₁,I₂,I₃,I₄) correspond à un numéro respectif situé en position x,y à l'intérieur d'une matrice supplémentaire respective M₁,M₂,M₃,M₄ et la valeur dudit nombre est le niveau de gris correspondant dudit pixel;
D) en créant une matrice de cooccurrence respective *P*₁(*i*,*j*|Δ*x,*Δ*y*), *P*₂(*i*,*j*|Δ*x,*Δ*y*)*, P*₃(*i,j*|Δ*x,*Δ*y*)*, P*₄(*i,j*|Δ*x,*Δ*y*) pour chacune desdites quatre autres matrices M₁,M₂,M₃,M₄, dans lesquelles chaque matrice de cooccurrence contient des informations sur le noyau (C) de ladite cellule en termes de texture, de l'amplitude et de la morphologie, et est une matrice de dimensions G × G, où G est le nombre de niveaux de gris, et chacune desdites matrices de cooccurrence *P*₁(*i,j*|Δ*x*,Δ*y*), *P*₂*(i,j*|Δ*x,*Δ*y*), *P*₃(*i,j*|*Δx,Δy*)*, P*₄(*i,j*|Δ*x,*Δ*y*) comporte, en position respective i,j, le nombre de paires d'éléments d'une autre matrice respective M₁, M2, M3, M₄, dans lesquelles chaque paire d'éléments est associée à une paire respective de pixels et est formée par un premier élément associé à un premier pixel de ladite paire de pixels ayant un niveau de gris égal à i et par un deuxième élément associé à un deuxième pixel de ladite paire de pixels, différent dudit premier pixel et ayant un niveau de gris égal à j, où i est un entier positif i = 0...G et j est un entier positif j = 0...G;
E) calculer une pluralité de fonctions statistiques SF₁,SF₂...SF_{N} en partant de chaque cooccurrence issue des matrices *P*₁(*i,j*|Δ*x,*Δ*y*)*, P*₂(*i,j*|Δ*x,*Δ*y*), *P*₃(*i,j*|Δ*x,*Δ*y*)*, P*₄(*i,j*|Δ*x,*Δ*y*) pour caractériser au moins la texture du noyau (C) de ladite cellule, dans laquelle chaque fonction statistique SF₁,SF₂...SF_{N} est associée à un paramètre respectif d'une autre image du noyau (C) de ladite cellule et le résultat de chaque fonction statistique SF₁,SF₂...SF_{N} est un nombre respectif, de sorte qu'un vecteur V de nombres comprenant quatre sous-vecteurs v₁,v₂,v₃,v₄ est associé au noyau (C) de ladite cellule, chaque sous-vecteur étant associé à une autre image respective (I₁,I₂,I₃,I₄) et contenant k éléments, où k est le nombre desdites fonctions statistiques,
F) fournir en entrée à un réseau neuronal (NN) prédéterminé les résultats desdites fonctions statistiques SF₁,SF₂...SF_{N}, dans lequel ledit réseau neuronal prédéterminé (NN) comprend une couche de sortie comportant au moins un premier nœud de sortie (N_{OUT1}) et est configuré pour fournir en sortie une première valeur numérique comprise entre 0 et 1 au niveau dudit premier nœud de sortie (N_{OUT1}),
G) comparer ladite première valeur numérique à un seuil prédéterminé,
H) déterminer si ladite cellule est une cellule pathologique, en particulier une cellule tumorale, lorsque ladite première valeur numérique est supérieure audit seuil prédéterminé.

2. Procédé selon la revendication précédente, dans lequel
l'étape G comprend la sous-étape G1 consistant à rapprocher ladite première valeur numérique de 1, lorsque ladite première valeur numérique est supérieure audit seuil prédéterminé, et de 0, lorsque ladite première valeur numérique est inférieure ou égale audit seuil prédéterminé,
dans lequel
en ce qui concerne l'étape H, le noyau (C) de ladite cellule est le noyau d'une cellule malade, en particulier d'une cellule tumorale, lorsque ladite première valeur numérique est proche de 1.

3. Procédé selon l'une quelconque des revendications précédentes, dans lequel
ladite couche de sortie comprend un deuxième nœud de sortie (N_{OUT2}),
dans lequel
en référence à l'étape F, ledit réseau neuronal prédéterminé (NN) est configuré pour fournir en sortie une deuxième valeur numérique comprise entre 0 et 1 au niveau dudit deuxième nœud de sortie (N_{OUT2}),
dans lequel
l'étape G consiste à comparer ladite deuxième valeur numérique avec ledit seuil prédéterminé,
dans lequel
l'étape H permet de déterminer si ladite cellule est une cellule malade, en particulier une cellule tumorale, lorsque ladite deuxième valeur numérique est inférieure ou égale audit seuil prédéterminé, ainsi que lorsque ladite première valeur numérique est supérieure audit seuil prédéterminé.

4. Procédé selon les revendications 2 et 3, dans lequel l'étape G comprend la sous-étape G2 consistant à rapprocher ladite deuxième valeur numérique de 1, lorsque ladite deuxième valeur numérique est supérieure audit seuil prédéterminé, et de 0, lorsque ladite deuxième valeur numérique est inférieure ou égale audit seuil prédéterminé,
dans lequel
en ce qui concerne l'étape H, le noyau (C) de ladite cellule est le noyau d'une cellule malade, en particulier d'une cellule tumorale, lorsque ladite deuxième valeur numérique tend vers 0, ainsi que lorsque ladite première valeur numérique tend vers 1.

5. Procédé selon l'une quelconque des revendications précédentes, dans lequel ladite pluralité de fonctions statistiques comprend:
- une première fonction statistique SF₁, appelée moment de différence inverse, qui permet d'évaluer l'homogénéité de la distribution des niveaux de gris: ${IDM}_{z} = {\sum }_{i = 1}^{N ′} {\sum }_{j - 1}^{N ′} \frac{{P}_{z} \left(i,j\left|Δx,Δy\right.\right)}{{\left|i-j\right|}^{2}} i \neq j$ où
*P_{z}*(*i*,*j*|Δ*x*,Δ*y*) est la matrice de cooccurrence;
*i* est un nombre qui identifie le niveau de gris associé audit premier pixel d'une autre image;
*j* est un nombre qui identifie le niveau de gris dudit deuxième pixel de ladite autre image, dans laquelle ledit deuxième pixel est différent dudit premier pixel et est situé à côté dudit premier pixel ou à une distance prédéterminée de celui-ci.
- une deuxième fonction statistique SF₂, appelée Énergie, qui indique l'homogénéité de la structure de la texture du noyau (C) de la cellule: ${EN}_{z} = {\sum }_{i = 1}^{N ′} {\sum }_{j = 1}^{N ′} {{P}_{z}}^{2} \left(i,j\left|Δx,Δy\right.\right)$ où
P_{z}(i,j|Δx,Δy) est la matrice de cooccurrence;
- une troisième fonction statistique SF₃, appelée entropie de norme, destinée à prendre en compte le niveau d'encombrement entre les pixels: ${NE}_{z} = \frac{{\sum }_{i = 1}^{N ′} {\sum }_{j = 1}^{N ′} {\left|{P}_{z}\left(i,j\left|Δx,Δy\right.\right)\right|}^{p}}{N ′}$ où
*P_{z}*(*i,j*|Δ*x,*Δ*y*) est la matrice de cooccurrence;
*p* = 1, 5
- une quatrième fonction statistique SF₄, appelée homogénéité locale, qui permet d'indiquer la présence de zones homogènes ou non homogènes: ${LO}_{z} = {\sum }_{i = 1}^{N ′} {\sum }_{j = 1}^{N ′} \frac{{P}_{z} \left(i,j\left|Δx,Δy\right.\right)}{1 + {\left(i-j\right)}^{2}}$ où
*P_{z}*(*i,j*|Δ*x,*Δ*y*) est la matrice de cooccurrence;
*i* est un nombre qui identifie le niveau de gris associé audit premier pixel d'une autre image;
*j* est un nombre qui identifie le niveau de gris dudit deuxième pixel de ladite autre image, dans laquelle ledit deuxième pixel est différent dudit premier pixel et est situé à côté dudit premier pixel ou à une distance prédéterminée de celui-ci;
- une cinquième fonction statistique SF₅, appelée Cluster Shade, qui permet de mettre en évidence une asymétrie de la matrice de cooccurrence: ${CS}_{z} = {\sum }_{i = 1}^{N ′} {\sum }_{j = 1}^{N ′} {\left(i-{Px}_{z}+j-{Py}_{z}\right)}^{3} {P}_{z} \left(i,j\left|Δx,Δy\right.\right)$ où
*P_{z}(i,j*|Δ*x,*Δ*y*) est la matrice de cooccurrence; ${Px}_{z} = {\sum }_{i , j = 1}^{N ′} iP \left(i,j\left|Δx,Δy\right.\right)$ ${Py}_{z} = {\sum }_{i , j = 1}^{N ′} jP \left(i,j\left|Δx,Δy\right.\right)$
*i* est un nombre qui identifie le niveau de gris associé audit premier pixel d'une autre image;
*j* est un nombre qui identifie le niveau de gris dudit deuxième pixel de ladite autre image, dans laquelle ledit deuxième pixel est différent dudit premier pixel et est situé à côté dudit premier pixel ou à une distance prédéterminée de celui-ci;
- une sixième fonction statistique SF₆, appelée Cluster Prominence, qui met en évidence une asymétrie supplémentaire de la matrice de cooccurrence: ${CP}_{z} = {\sum }_{i = 1}^{N ′} {\sum }_{j = 1}^{N ′} {\left(i-{Px}_{z}+j-{Py}_{z}\right)}^{4} {P}_{z} \left(i,j\left|Δx,Δy\right.\right)$ où
*P_{z}*(*i,j*|Δ*x,*Δ*y*) est la matrice de cooccurrence; ${Px}_{z} = {\sum }_{i , j = 1}^{N ′} iP \left(i,j\left|Δx,Δy\right.\right)$ ${Py}_{z} = {\sum }_{i , j = 1}^{N ′} jP \left(i,j\left|Δx,Δy\right.\right)$
*i* est un nombre qui identifie le niveau de gris associé audit premier pixel d'une autre image;
*j* est un nombre qui identifie le niveau de gris dudit deuxième pixel de ladite autre image, dans laquelle ledit deuxième pixel est différent dudit premier pixel et est situé à côté dudit premier pixel ou à une distance prédéterminée de celui-ci;
- une septième fonction statistique SF₇, appelée Contraste, permettant de déterminer la différence d'intensité entre deux niveaux de gris, un premier niveau de gris associé audit premier pixel et un second niveau de gris associé audit second pixel: ${CS}_{z} = {\sum }_{i = 1}^{N ′} {\sum }_{j = 1}^{N ′} {\left(i-j\right)}^{2} {P}_{z} \left(i,j\left|Δx,Δy\right.\right)$ où
*P_{z}*(*i*,*j*|Δ*x*,Δ*y*) est la matrice de cooccurrence;
*i* est un nombre qui identifie le niveau de gris associé audit premier pixel d'une autre image;
*j* est un nombre qui identifie le niveau de gris dudit deuxième pixel de ladite autre image, dans laquelle ledit deuxième pixel est différent dudit premier pixel et est situé à côté dudit premier pixel ou à une distance prédéterminée de celui-ci.

6. Procédé selon la revendication précédente, dans lequel ladite pluralité de fonctions statistiques comprend deux fonctions statistiques supplémentaires destinées à caractériser respectivement la taille et la morphologie du noyau (C) de ladite cellule:
- une huitième fonction statistique SF₈, dénommée Extension, permettant d'estimer la taille du noyau (C) de la cellule à partir d'un certain nombre de paires de pixels, chacune étant constituée d'un premier pixel et d'un deuxième pixel distinct de ce premier pixel et situé à proximité immédiate de celui-ci, le premier et le deuxième pixel de chaque paire ayant une valeur de gris égale à 0: $EX = 1 / Pz \left(i=1, j=1\left|Δx,Δy\right.\right)$ où
*P_{z}*(*i* = 1, j = 1|Δ*x*,Δ*y*) est le premier élément de la matrice de cooccurrence;
- une neuvième fonction statistique SF₉, dénommée Estimation de la longueur des bords, destinée à fournir une estimation du périmètre du noyau de la cellule (C) à partir d'un certain nombre de paires de pixels, chacune étant formée d'un premier pixel et d'un deuxième pixel distinct de ce premier pixel et situé à proximité immédiate de celui-ci, l'un des deux pixels ayant une valeur de gris égale à 0: $ELE = {\sum }_{i = 2}^{N} {P}_{z} \left(i,j=1\left|Δx,Δy\right.\right) + {\sum }_{j = 2}^{N} {P}_{z} \left(i=1,j\left|Δx,Δy\right.\right)$ où
*P_{z}*(*i,j* = 1|Δ*x*,Δ*y*) pour *i* ≠ 1 est la somme des éléments de la première ligne de la matrice de cooccurrence;
*P_{z}*(i = *1,j*|Δ*x*,Δ*y*) pour *j* ≠ 1 correspond à la somme des éléments de la première colonne de la matrice de cooccurrence.

7. Procédé selon l'une quelconque des revendications précédentes, dans lequel ledit réseau neuronal prédéterminé (NN) comprend une couche d'entrée et ladite couche d'entrée comprend un certain nombre de nœuds d'entrée (N_{IN1}, N_{IN2}... N_{INF}) égal au nombre total de fonctions statistiques SF₁,SF₂...SF_{N} calculées pour chaque matrice de cooccurrence.

8. Procédé selon l'une quelconque des revendications précédentes, dans lequel ledit réseau neuronal prédéterminé (NN) comprend au moins une couche cachée, ladite couche cachée comprenant au moins un premier nœud caché respectif (N_{N1}).

9. Procédé selon la revendication précédente, dans lequel ladite couche cachée comprend dix nœuds cachés (N_{N1},N_{N2}... N_{N10}).

10. Procédé selon l'une quelconque des revendications précédentes, dans lequel ladite couleur prédéterminée dudit arrière-plan est la couleur noire.

11. Procédé selon l'une quelconque des revendications précédentes, dans lequel ledit agent intercalant l'DNA est un fluorochrome, de préférence le DRAQ5.

12. Système permettant de déterminer si au moins une cellule (C) de tissu corporel représentée sur une image de fluorescence nucléaire acquise à l'aide d'un microscope confocal est une cellule pathologique, en particulier une cellule tumorale, dans lequel ladite fluorescence est obtenue à l'aide d'un agent intercalant l'DNA, ledit système comprenant:
- des moyens de stockage (SM) dans lesquels ladite image de fluorescence nucléaire et un seuil prédéterminé sont enregistrés,
- un réseau neuronal prédéfini (NN) comprenant une couche de sortie, ladite couche de sortie comportant au moins un premier nœud de sortie (N_{OUT1}), et configuré pour fournir en sortie une première valeur numérique comprise entre 0 et 1 au niveau dudit premier nœud de sortie (N_{OUT1}),
- une unité de commande logique (U), connectée audit moyen de stockage (SM) et audit réseau neuronal prédéterminé (NN) et configurée pour:
∘ segmenter ladite image de fluorescence nucléaire afin d'obtenir au moins une image segmentée correspondant au noyau (C) d'une cellule unique;
∘ insérer ladite au moins une image segmentée Iₛ par rapport audit noyau (C) de ladite cellule sur un fond de couleur prédéterminée afin d'obtenir au moins une image de référence (I_{REF}), dans laquelle une matrice de référence M_{REF} de dimensions M x N est associée à ladite image de référence (I_{REF}) et à chaque pixel de ladite image de référence (I_{REF}) correspond un numéro respectif dans ladite matrice de référence M_{REF} dont la valeur est le niveau de gris respectif dudit pixel;
∘ appliquer une transformation en ondelettes discrète à ladite matrice de référence MREF pour obtenir:
une autre première matrice M₁ associée à une autre première image (I₁) qui est une image du noyau (C) de la cellule représentée sur ladite image de référence (I_{REF}), dans laquelle ladite autre première image (I₁) a une résolution inférieure à celle de ladite image de référence (I_{REF}),
une deuxième matrice M₂ associée à une deuxième image (I₂) rapportée aux composantes horizontales de ladite image de référence (I_{REF}),
une troisième matrice M₃ associée à une troisième image (I₃) se rapportant aux composantes verticales de ladite image de référence (I_{REF}) ,
une quatrième matrice supplémentaire M₄ associée à une quatrième image supplémentaire (I₄) se référant aux composantes diagonales de ladite image de référence (I_{REF}), dans laquelle chacune desdites matrices supplémentaires M₁,M₂,M₃,M₄ est une matrice de dimensions M' x N' et un nombre respectif en position x,y à l'intérieur d'une autre matrice respective M₁,M₂,M₃,M₄ correspond à un pixel en position x,y de chaque image supplémentaire (I₁,I₂,I₃,I₄) et la valeur dudit nombre est le niveau de gris respectif dudit pixel;
∘ créer une matrice de cooccurrence respective *P*₁(*i,j*|Δ*x,*Δ*y*), *P*₂(*i,j*|Δ*x,*Δ*y*)*, P*₃(*i,j*|Δ*x,*Δ*y*), *P*₄(*i,j*|Δ*x,*Δ*y*) pour chacune desdites quatre autres matrices M₁,M₂,M₃,M₄, dans lesquelles chaque matrice de cooccurrence contient des informations sur le noyau (C) de ladite cellule en termes de texture, d'amplitude et de morphologie, et est une matrice de dimensions G x G, où G est le nombre de niveaux de gris et chacune desdites matrices de co- occurrence *P*₁(*i,j*|Δ*x,*Δ*y*), *P*₂(*i,j*|Δ*x,*Δ*y*)*, P*₃(*i,j*|Δ*x,*Δ*y*)*, P*₄(*i,j*|Δ*x,*Δ*y*) comporte, à une position respective i,j, le nombre de paires d'éléments d'une autre matrice respective M₁,M₂,M₃,M₄, dans laquelle chaque paire d'éléments est associée à une paire respective de pixels et est formée par un premier élément associé à un premier pixel de ladite paire de pixels ayant un niveau de gris égal à i et par un deuxième élément associé à un deuxième pixel de ladite paire de pixels, différent dudit premier pixel et ayant un niveau de gris égal à j, où i est un entier positif i = 0...G et j est un entier positif j = 0...G;
∘ calculer une pluralité de fonctions statistiques SF₁,SF₂...SF_{N} à partir de chaque matrice de cooccurrence *P*₁(*i,j*|Δ*x*,Δ*y*), *P*₂(*i,j*|Δ*x,*Δ*y*), *P*₃(*i,j*|Δ*x*,Δ*y*)*, P*₄(*i,j*|Δ*x,*Δ*y*) afin de caractériser au moins la texture du noyau (C) de ladite cellule, dans laquelle chaque fonction statistique SF₁,SF₂...SF_{N} est associée à un paramètre respectif d'une autre image du noyau (C) de ladite cellule et le résultat de chaque fonction statistique SF₁,SF₂...SF_{N} est un nombre respectif, de sorte qu'un vecteur V de nombres comprenant quatre sous-vecteurs v₁,v₂,v₃ et v₄ est associé au noyau (C) de ladite cellule, chaque sous-vecteur étant associé à une autre image respective (I₁,I₂,I₃,I₄) et contenant k éléments, où k est le nombre desdites fonctions statistiques,
∘ fournir en entrée audit réseau neuronal prédéterminé (NN) les résultats desdites fonctions statistiques SF₁,SF₂...SF_{N} afin d'obtenir une première valeur numérique comprise entre 0 et 1 au niveau dudit premier nœud de sortie (N_{OUT1}),
∘ comparer ladite première valeur numérique avec ledit seuil prédéterminé stocké dans ledit moyen de stockage (SM),
∘ déterminer si ladite cellule est une cellule malade, en particulier une cellule tumorale, lorsque ladite première valeur numérique est supérieure audit seuil prédéterminé.

13. Système selon la revendication précédente, dans lequel ladite unité de commande logique est configurée pour faire tendre ladite première valeur numérique vers 1 lorsque ladite première valeur numérique est supérieure audit seuil prédéterminé, et vers 0 lorsque ladite première valeur numérique est inférieure ou égale audit seuil prédéterminé, et à déterminer si le noyau (C) de ladite cellule est le noyau d'une cellule malade, en particulier d'une cellule tumorale, lorsque ladite première valeur numérique est rapprochée de 1.

14. Système selon l'une quelconque des revendications 12 à 13, dans lequel
ladite couche de sortie comprend un deuxième nœud de sortie (N_{OUT2}),
dans lequel
ledit réseau neuronal prédéterminé (NN) est configuré pour fournir en sortie une deuxième valeur numérique comprise entre 0 et 1 au niveau dudit deuxième nœud de sortie (N_{OUT2}),
dans lequel
ladite unité de commande logique (U) est configurée pour comparer ladite deuxième valeur numérique audit seuil prédéterminé et pour déterminer si le noyau (C) de ladite cellule est le noyau d'une cellule malade, en particulier d'une cellule tumorale, lorsque ladite deuxième valeur numérique est inférieure ou égale audit seuil prédéterminé, ainsi que lorsque ladite première valeur numérique est supérieure audit seuil prédéterminé.

15. Système selon la revendication 14, lorsqu'il relève de la revendication 13, dans lequel ladite unité de commande logique (U) est configurée pour rapprocher ladite deuxième valeur numérique de 1, lorsque ladite deuxième valeur numérique est supérieure audit seuil prédéterminé, et de 0, lorsque ladite deuxième valeur numérique est inférieure ou égale audit seuil prédéterminé, et à déterminer si le noyau (C) de ladite cellule est le noyau d'une cellule malade, en particulier d'une cellule tumorale, lorsque ladite deuxième valeur numérique est rapprochée de 0, ainsi que lorsque ladite première valeur numérique est rapprochée de 1.

16. Programme informatique comprenant des moyens de code configurés de telle sorte que, lorsqu'ils sont exécutés sur un ordinateur, ils mettent en œuvre les étapes du procédé selon l'une quelconque des revendications 1-11.

17. Support de stockage lisible par ordinateur comprenant des instructions qui, lorsqu'elles sont exécutées par un ordinateur, amènent celui-ci à mettre en œuvre les étapes du procédé selon l'une quelconque des revendications 1-11.
